(19) Europäisches Patentamt
European Patent Office
Office européen des brevets

(11) **EP 4 474 086 A1**

(12) **EUROPEAN PATENT APPLICATION**
published in accordance with Art. 153(4) EPC

(43) Date of publication:
**11.12.2024   Bulletin 2024/50**

(51) International Patent Classification (IPC):
**B23D 15/06** (2006.01)          **B21D 28/16** (2006.01)
**B23D 35/00** (2006.01)

(21) Application number: **22924809.1**

(52) Cooperative Patent Classification (CPC):
**B21D 28/16; B23D 15/06; B23D 35/00**

(22) Date of filing: **03.02.2022**

(86) International application number:
**PCT/JP2022/004311**

(87) International publication number:
**WO 2023/148899 (10.08.2023 Gazette 2023/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIPPON STEEL CORPORATION**
**Chiyoda-ku**
**Tokyo 100-8071 (JP)**

(72) Inventors:
• **HONDA, Yoshiaki**
**Tokyo 100-8071 (JP)**
• **SAKIYAMA, Yuji**
**Tokyo 100-8071 (JP)**
• **YASUTOMI, Takashi**
**Tokyo 100-8071 (JP)**
• **NAKATA, Masahiro**
**Tokyo 100-8071 (JP)**

(74) Representative: **Vossius & Partner**
**Patentanwälte Rechtsanwälte mbB**
**Siebertstrasse 3**
**81675 München (DE)**

(54) **STEEL MATERIAL, AUTOMOBILE COMPONENT, SHEARING DEVICE, AND MANUFACTURING METHOD FOR STEEL MATERIAL**

(57)     A steel material reduced in tensile residual stress at a sheared edge, in particular a fractured surface, is disclosed. The steel material of the present disclosure has a sheared edge, the sheared edge has a rollover, a fractured surface, and a burr, the fractured surface includes a first part and a second part, the first part is formed by a first crack propagating from the rollover side to the burr side, the second part is formed by a second crack propagating from the burr side to the rollover side, and an area ratio of the first part in the fractured surface is greater than an area ratio of the second part in the fractured surface.

Fig. 4

EP 4 474 086 A1

**Description**

FIELD

The present application discloses a steel material having a sheared edge, an auto part provided with the steel material, a shearing apparatus for producing the steel material, and a method of production of the steel material.

BACKGROUND

PTL 1 discloses the art of shearing a steel material using a punch and a die. In PTL 1, the fractured surface of the punched out material which is punched out by the punch is pressed against the fractured surface of the steel material to thereby reduce the tensile residual stress of the fractured surface of the steel material.

[CITATIONS LIST]

[PATENT LITERATURE]

[PTL 1] WO2016/136909

SUMMARY

[TECHNICAL PROBLEM]

As disclosed in PTL 1, at the fractured surface in the sheared edge of the steel material, the tensile residual stress may become great. A new steel material reduced in tensile residual stress at the fractured surface in particular in the sheared edge is necessary.

[SOLUTION TO PROBLEM]

The present application discloses, as one of the means for solving the above technical problem:

a steel material having a sheared edge, wherein
the sheared edge has a rollover, a fractured surface, and a burr,
the fractured surface includes a first part and a second part,
the first part is formed by a first crack propagating from the rollover side to the burr side,
the second part is formed by a second crack propagating from the burr side to the rollover side, and
an area ratio of the first part in the fractured surface is 1.2 times or more of an area ratio of the second part in the fractured surface.

In the steel material of the present disclosure, the area ratio of the first part in the fractured surface may be 1.5 times or more of the area ratio of the second part in the fractured surface.
In the steel material of the present disclosure, the area ratio of the first part in the fractured surface may be 2.0 times or more of the area ratio of the second part in the fractured surface.
The steel material of the present disclosure may have a sheet shape.
The steel material of the present disclosure may have a tensile strength of 980 MPa or more.
The steel material of the present disclosure may have a tensile strength of 1470 MPa or more.
The present application discloses as another of the means for solving the above technical problem:
an auto part comprising the steel material of the present disclosure.
The present application discloses as another of the means for solving the above technical problem:
A shearing apparatus comprising

a first cutting blade and
a second cutting blade, wherein
the first cutting blade and the second cutting blade are configured to be able to move relative to each other,
the first cutting blade has a first bottom surface, a first side surface, and a first front end part,
the second cutting blade has a second bottom surface, a second side surface, and a second front end part, and
a friction coefficient of the first front end part is 1.2 times or more of a friction coefficient of the second front end part.

In the shearing apparatus of the present disclosure, the friction coefficient of the first front end part may be 1.5 times or more of the friction coefficient of the second front end part.

In the shearing apparatus of the present disclosure, the friction coefficient of the first front end part may be 2.0 times or more of the friction coefficient of the second front end part.

In the shearing apparatus of the present disclosure, the second front end part may be given a second coating.

In the shearing apparatus of the present disclosure, the second front end part may be given a second coating, the first front end part may be given a first coating, and a peeling life of the second coating may be longer than a peeling life of the first coating.

In the shearing apparatus of the present disclosure, a surface roughness of the first front end part may be greater than a surface roughness of the second front end part.

The present application discloses as another of the means for solving the above technical problem:

A shearing apparatus comprising

a first cutting blade and
a second cutting blade, wherein
the first cutting blade and the second cutting blade are configured to be able to move relative to each other,
the first cutting blade has a first bottom surface, a first side surface, and a first front end part,
the first front end part includes at least one of

a first inclined surface inclined with respect to the first bottom surface and
a first curved surface,

the second cutting blade has a second bottom surface, a second side surface, and a second front end part,
the second front end part includes at least one of

a second inclined surface inclined with respect to the second bottom surface and
a second curved surface,

a shear angle $\alpha$ is formed between the first front end part and the second front end part,
$\Delta CT$ calculated based on the following formulas (1) to (4) satisfies the relationship of

$$(0.15 \times \alpha^2 + 0.05 \times \alpha + 1) < \Delta CT \leq 40$$

$$\Delta CT = \Delta CA + \Delta CB \ ...(1)$$

$$\Delta CA = C2 - C1 \ ...(2)$$

$$\Delta CB = 80 \times \Delta R \ ...(3)$$

$$\Delta R = R2 - R1 \ ...(4)$$

where,

C1 [°] is a smaller angle which the first inclined surface forms with the first bottom surface,
C2 [°] is a smaller angle which the second inclined surface forms with the second bottom surface,
R1 [mm] is a radius of curvature of the first curved surface, and
R2 [mm] is a radius of curvature of the second curved surface.

In the shearing apparatus of the present disclosure, the first front end part may have the first inclined surface and the second front end part may have the second inclined surface.

In the shearing apparatus of the present disclosure, the first front end part may have the first curved surface and the second front end part may have the second curved surface.

In the shearing apparatus of the present disclosure, the first front end part may have the first inclined surface and the first curved surface, and the second front end part may have the second inclined surface and the second curved surface.

In the shearing apparatus of the present disclosure, the shear angle $\alpha$ may be 0.5° or more and 10° or less.

In the shearing apparatus of the present disclosure, the steel sheet as a workpiece may be sheared and a clearance between the first cutting blade and the second cutting blade may be 5% or more and 25% or less of the thickness of the steel sheet.

The present application discloses as another of the means for solving the above technical problem:

a method of production of a steel material as a processed material using the shearing apparatus of the present disclosure, the method comprising:

placing a workpiece between the first cutting blade and the second cutting blade; and

making the first cutting blade and the second cutting blade move relative to each other to shear the workpiece.

In the method of production of the present disclosure, a tensile strength of the workpiece may be 980 MPa or more.

In the method of production of the present disclosure, a tensile strength of the workpiece may be 1470 MPa or more.

[ADVANTAGEOUS EFFECT OF INVENTION]

In the steel material of the present disclosure, the tensile residual stress of the fractured surface in the sheared edge can be reduced.

BRIEF DESCRIPTION OF DRAWINGS

FIG. 1A is a schematic view for explaining one example of the flow of shearing work. It shows the state where a workpiece is placed between a first cutting blade and a second cutting blade.

FIG. 1B shows the state where the first cutting blade and the second cutting blade are relatively moved to make them approach so as to make a bottom surface of the first cutting blade contact a first surface of the workpiece and make a bottom surface of the second cutting blade contact a second surface of the workpiece.

FIG. 1C shows the state where the first cutting blade punches out one part of the workpiece.

FIG. 1D shows the state where the first cutting blade and the second cutting blade are moved apart to return to the positions of FIG. 1A.

FIG. 2A is a schematic view for explaining one example of a mechanism of formation of a sheared edge in the case of shearing a workpiece. It shows an embodiment of a cross-section along a relative direction of movement of the first cutting blade and second cutting blade which includes the first cutting blade, the second cutting blade, and the workpiece. It shows the state where the first cutting blade and second cutting blade are pressed against the workpiece to thereby form the rollover at the workpiece.

FIG. 2B shows the state of formation of a crack at the workpiece by further pressing the first cutting blade and second cutting blade against the workpiece after formation of the rollover.

FIG. 2C shows the state of punching out one part of the workpiece by further pressing the first cutting blade and second cutting blade against the workpiece after formation of the crack.

FIG. 3A is a schematic view for explaining the state of tensile residual stress of the sheared edge in the case of making a crack propagate from the first cutting blade. "o" means the tensile residual stress is small while "×" means the tensile residual stress is large.

FIG. 3B is a schematic view for explaining the state of tensile residual stress of the sheared edge in the case of making cracks propagate from both of the first cutting blade and the second cutting blade. "△" means the tensile residual stress is a medium extent.

FIG. 3C is a schematic view for explaining the state of tensile residual stress of the sheared edge in the case of making a crack propagate from the second cutting blade. "o" means the tensile residual stress is small while "×" means the tensile residual stress is large.

FIG. 4 is a schematic view for explaining one example of the constitution of the steel material of the present disclosure.

FIG. 5 is a schematic view for explaining one example of the constitution of the sheared edge of the steel material of the present disclosure. It shows the state when viewing the sheared edge from the front.

FIG. 6A is a schematic view for explaining a method of discriminating between the first part and second part at the fractured surface. It schematically shows the orientation of a hydrogen embrittlement crack occurring at the fractured surface.

FIG. 6B schematically shows the relationship between any position X from the rollover side to the burr side at the fractured surface and the orientation (angle 0) of the hydrogen embrittlement crack.

FIG. 7A schematically shows one example of an auto part (B pillar).

FIG. 7B schematically shows one example of an auto part (side sill).

FIG. 7C schematically shows one example of an auto part (lower arm).

FIG. 8 is a schematic view for explaining one example of the constitution of the shearing apparatus of the present disclosure. It schematically shows the cross-sectional shapes of the first cutting blade and second cutting blade.

FIG. 9A is a schematic view for explaining a "front end part" of a cutting blade. It shows the cross-section in the case of no processing for rounding the edges or chamfering at the front end part of the cutting blade.

FIG. 9B is a schematic view for explaining a "front end part" of a cutting blade. It shows the cross-section in the case of processing for rounding the edges at the front end part of the cutting blade.

FIG. 10A is a schematic view for explaining one example of the constitution of the shearing apparatus of the present disclosure. It schematically shows the cross-sectional shapes of the first cutting blade and second cutting blade. It shows an embodiment where only the second cutting blade is given a coating.

FIG. 10B is a schematic view for explaining one example of the constitution of the shearing apparatus of the present disclosure. It schematically shows the cross-sectional shapes of the first cutting blade and second cutting blade. It shows an embodiment where only the first cutting blade is given a coating.

FIG. 10C is a schematic view for explaining one example of the constitution of the shearing apparatus of the present disclosure. It schematically shows the cross-sectional shapes of the first cutting blade and second cutting blade. It shows an embodiment where both the first cutting blade and second cutting blade are given coatings.

FIG. 11 is a schematic view for explaining a shear angle.

FIG. 12 is a schematic view for explaining one example of the constitution of the shearing apparatus of the present disclosure.

FIG. 13 is a schematic view for explaining one example of the constitution of the shearing apparatus of the present disclosure.

FIG. 14 is a schematic view for explaining one example of the constitution of the shearing apparatus of the present disclosure. It schematically shows a cross-section along the arrow direction IV-IV of FIG. 13.

FIG. 15 is a view for explaining a method of calculation of a difference of radius of curvature in the case where the difference of radius of curvature of the front end part is uneven along the direction of extension of the front end part.

FIG. 16 is a view showing the relationship of a difference of inclination angle and shear angle in the shearing apparatus.

FIG. 17 is a schematic view for explaining one example of the constitution of the shearing apparatus of the present disclosure. It schematically shows a cross-section along the arrow direction IV-IV of FIG. 13.

FIG. 18 is a view showing the relationship of a difference of radius of curvature and shear angle in the shearing apparatus.

FIG. 19 is a schematic view for explaining one example of the constitution of the shearing apparatus of the present disclosure. It schematically shows a cross-section along the arrow direction IV-IV of FIG. 13.

FIG. 20 is a schematic view for explaining one example of the constitution of the shearing apparatus of the present disclosure.

FIG. 21 is a plan schematic view for explaining a method of confirmation of the shear angle at the shearing apparatus.

FIG. 22 shows a specific example, in specifically determining the area ratios of the first part and the second part at the fractured surface, of introducing a large amount of hydrogen at the sheared edge of the steel material, examining the direction of hydrogen embrittlement cracking caused due to penetration of hydrogen, and specifically determining the position where the orientation of the hydrogen embrittlement cracking rapidly changes.

FIG. 23 shows the magnitudes of tensile residual stresses at the product and scrap obtained by the shearing apparatus according to an embodiment.

DESCRIPTION OF EMBODIMENTS

1. Problem and New Findings

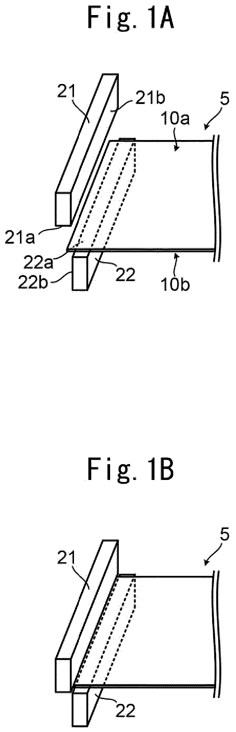

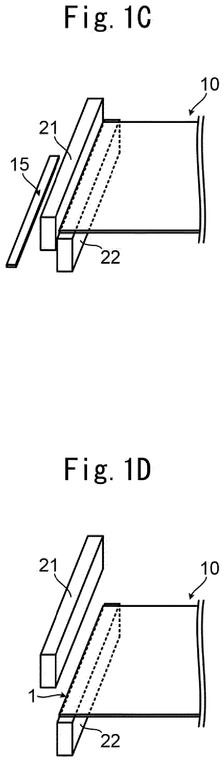

A steel material having a sheared edge can, for example, be obtained in the following way. First, as shown in FIG. 1A, a workpiece 5 comprised of steel is placed between a first cutting blade 21 and a second cutting blade 22. Here, the workpiece 5 has a first surface 10a and a second surface 10b at the opposite side to the first surface 10a, the first cutting blade 21 has a bottom surface 21a contacting the first surface 10a, and the second cutting blade 22 has a bottom surface 22a contacting the second surface 10b. The first cutting blade 21 may be a punch, and the second cutting blade 22 may be a die. Next, as shown in FIGS. 1B and 1C, the workpiece 5 is sheared by making the first cutting blade 21 and second cutting blade 22 relatively move. Due to this, as shown in FIGS. 1C and 1D, one part of the workpiece 5 is punched out by the first cutting blade 21 as scrap. The remaining part of the workpiece 5 becomes the steel material 10 having the sheared edge 1. Further, the scrap 15 can be utilized for some other product.

FIGS. 1A to 1D shows an embodiment where no shear angle is provided between the first cutting blade 21 and the second cutting blade 22, but a shear angle may also be provided between the first cutting blade 21 and the second cutting blade 22. Further, FIGS. 1A to 1D shows an embodiment where the intersection line of the bottom surface 21a and side surface 21b of the first cutting blade 21 (cutting edge (front end) of first cutting blade 21) extended straight toward the longitudinal direction of the first cutting blade 21, but the cutting edge of the first cutting blade 21 may also extend curved toward the longitudinal direction. That is, the shearing may be performed so that the shape of the sheared edge 1 in a plan view becomes straight, the shearing may be performed so that it becomes curved, or the shearing may be performed so that it becomes a combination of straight and curved shapes. Further, FIGS. 1A to 1D showed an embodiment where the first cutting blade 21 and the second cutting blade 22 are used to shear off an end part of the workpiece 5, but the first cutting blade 21 and the second cutting blade 22 may also be used to shear the workpiece 5 so as to form a punch hole, slit, etc. at one part of the workpiece 5. In this case as well, a steel material 10 having a sheared edge 1 can be obtained.

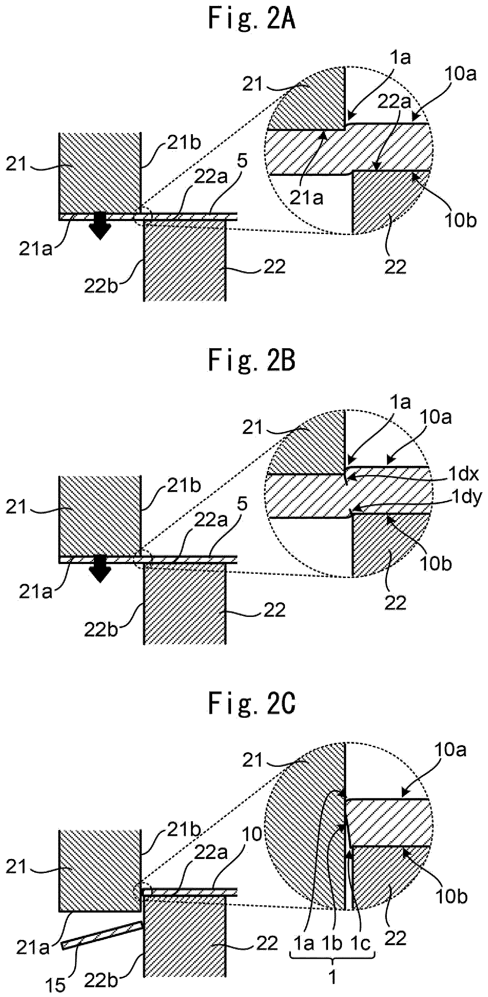

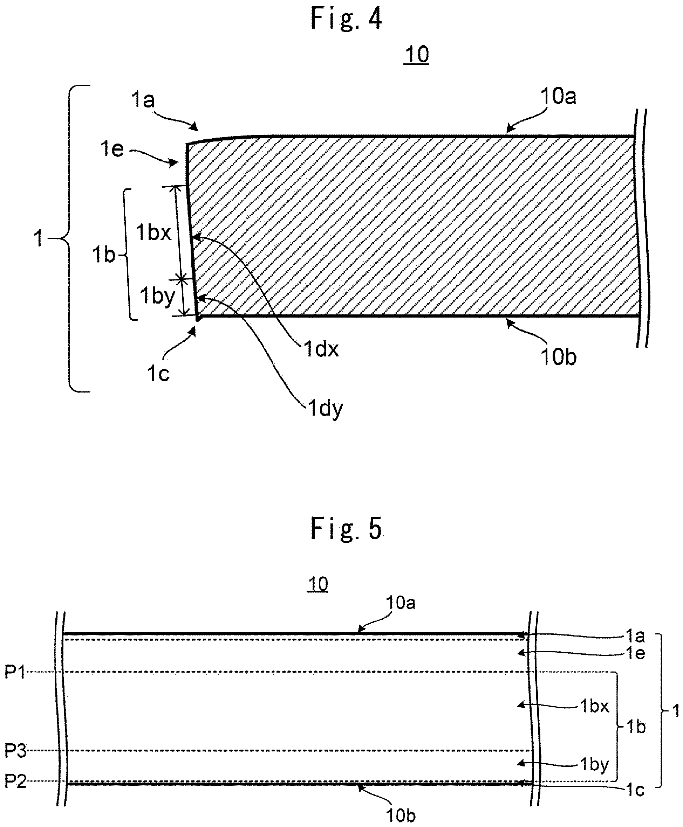

One example of the mechanism of formation of the sheared edge 1 will be explained. As shown in FIGS. 2A to 2C, considered is the case where the first cutting blade 21 and the second cutting blade 22 shear the workpiece 5 to thereby obtain a steel material 10 having the sheared edge 1. As shown in FIG. 2A, by the bottom surface 21a of the first cutting blade 21 being pressed against the first surface 10a of the workpiece 5, a rollover 1a is formed at the first surface 10a side of the workpiece 5. The rollover 1a is formed in the process until the cutting edge (front end) of the first cutting blade 21 bites into the workpiece 5. After the rollover 1a is formed, a burnished surface 1e (see FIG. 4) may be formed in the processing of the cutting edge of the first cutting blade 21 biting into the workpiece 5. As shown in FIG. 2B, after the rollover 1a and burnished surface 1e are formed, a first crack 1dx is formed from the first cutting blade 21 side toward the second cutting blade 22 side. On the other hand, in the same way as at the second cutting blade 22 side as well, after the cutting edge of the second cutting blade 22 bites into the second surface 10b of the workpiece 5, a second crack 1dy is formed from the second cutting blade 22 side toward the first cutting blade 21 side. As shown in FIG. 2C, the fractured surface 1b is formed by the first crack 1dx and second crack 1dy propagating and meeting each other. Further, by making the first cutting blade 21 and the second cutting blade 22 further relatively move, the workpiece 5 is separated from the scrap 15 and the target steel material 10. At this time, as shown in FIG. 2C, at the sheared edge 1 of the steel material 10, a burr 1c can be formed at the edge at the second cutting blade 22 side. Regardless of the presence or absence of a shear angle between the first cutting blade 21 and the second cutting blade 22 and the shape of the sheared edge 1 in a plan view (straight, curved, or combination of the same), the sheared edge 1 can be formed by the mechanism such as in FIGS. 2A to 2C.

At the sheared edge 1 formed in the above way, compressive residual stress and tensile residual stress can be formed by damage, strain, etc. due to shearing. If large tensile residual stress is present at the sheared edge 1, for example, the hydrogen embrittlement resistance, fatigue strength, etc. of the sheared edge 1 easily fall. On this point, to obtain a high performance steel material 10, doing something at the sheared edge 1 to reduce the tensile residual stress can become one task. In particular, as disclosed in PTL 1, it is sufficient that it be possible to reduce the tensile residual stress at the fractured surface 1b at the sheared edge 1.

The inventors engaged in numerous repeated experiments and analyses regarding the relationship of the conditions for shearing the workpiece 5 and the properties of the sheared edge 1 formed by the shearing and as a result obtained the following new findings.

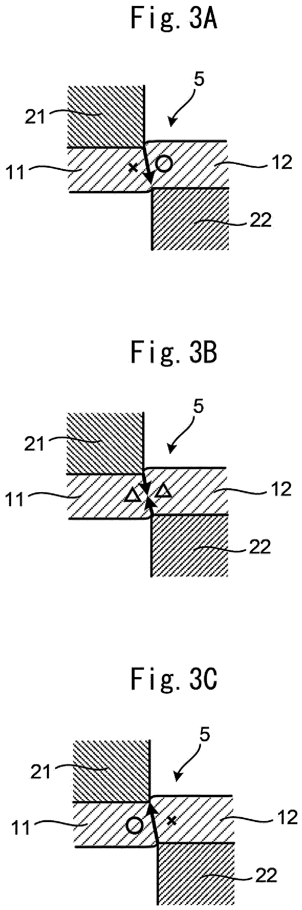

As shown in FIGS. 3A to 3C, the case will be explained of using the first cutting blade 21 to punch one part 11 of the workpiece 5 and using the second cutting blade 22 to punch the other part 12 of the workpiece 5. In this case, as shown in FIG. 3A, if a crack propagates with priority from the first cutting blade 21 side, the tensile residual stress at the sheared edge of the one part 11 becomes larger while the tensile residual stress at the sheared edge of the other part 12 becomes smaller. That is, the one part 11 can be treated as scrap 15, while the other part 12 can be suitably employed as a product (steel material 10). Further, as shown in FIG. 3B, if cracks similarly propagate from both of the first cutting blade 21 side and the second cutting blade 22 side, equal tensile residual stresses can be formed at the sheared edges of both the one part 11 and the other part 12. That is, variation of the properties between the one part 11 and the other part 12 is suppressed. On this point, it can be said preferable to employ both the one part 11 and the other part 12 as products. Furthermore, as shown in FIG. 3C, if a crack propagates with priority from the second cutting blade 22 side, the tensile residual stress at the sheared edge of the other part 12 becomes larger while the tensile residual stress at the sheared edge of the one part 11 becomes smaller. That is, the other part 12 is treated as scrap 15, while the one part 11 can be suitably employed as a product (steel material 10).

Due to the above, the following (1) to (3) can be said:

(1) The tensile residual stress at the fractured surface 1b of the sheared edge 1 changes depending on the directions of propagation and lengths of the cracks 1dx, 1dy forming the fractured surface 1b.
(2) At the fractured surface 1b, the longer the crack 1dx propagating from the rollover 1a side, the smaller the tensile residual stress of the fractured surface 1b of the steel material 10 and the larger the tensile residual stress of the fractured surface of the scrap 15.

(3) That is, at the fractured surface 1b of the steel material 10, when the area ratio of the part derived from the first crack 1dx propagated from the rollover 1a side is larger than the area ratio of the part derived from the second crack 1dy propagated from the burr 1c side, it is possible to relatively reduce the tensile residual stress of the fractured surface 1b, compared with the case that the area ratio of the part derived from the first crack 1dx propagated from the rollover 1a side is smaller than the area ratio of the part derived from the second crack 1dy propagated from the burr 1c side.

The steel material 10 of the present disclosure was completed based on the above findings. Below, the constitution of the steel material 10 of the present disclosure will be explained.

2. Steel Material

As shown in FIGS. 4 and 5, the steel material of the present disclosure 10 has a sheared edge 1. The sheared edge 1 has a rollover 1a, a fractured surface 1b, and a burr 1c. The fractured surface 1b includes a first part 1bx and a second part 1by. The first part 1bx is formed by a first crack 1dx propagated from the rollover 1a side to the burr 1c side, while the second part 1by is formed by a second crack 1dy propagated from the burr 1c side to the rollover 1a side. The area ratio of the first part 1bx at the fractured surface 1b is 1.2 times or more of the area ratio of the second part 1by at the fractured surface 1b.

2.1 Sheared Edge

As shown in FIGS. 4 and 5, the sheared edge 1 is provided with a rollover 1a, a fractured surface 1b, and a burr 1c. Further, the sheared edge 1 may also be provided with a burnished surface 1e. The rollover 1a, burr 1c, and burnished surface 1e at the sheared edge 1 may be of any form in accordance with the form of the steel material 10. The rollover 1a, burr 1c, and burnished surface 1e may also be forms similar to the prior art. However, as explained later, having the area ratio of the burnished surface 1e smaller rather than larger (that is, having the area ratio of the fractured surface 1b relatively large) results in a more effective art of the present disclosure.

The steel material of the present disclosure 10 has as one of its features the constitution of the fractured surface 1b at the sheared edge 1. As shown in FIG. 4 and 5, the fractured surface 1b includes a first part 1bx and a second part 1by. The first part 1bx is formed by the first crack 1dx propagating from the rollover 1a side to the burr 1c side, while the second part 1by is formed by the second crack 1dy propagating from the burr 1c side to the rollover 1a side.

The direction of propagation of the first crack 1dx may be a direction from the rollover 1a side to the burr 1c side. If the steel material 10 is a sheet shape, the direction of propagation of the first crack 1dx may be a direction running along the sheet thickness direction of the steel material 10 (direction perpendicular to first surface 10a and second surface 10b) or may be a direction inclined with respect to the sheet thickness direction. Further, the direction of propagation of the second crack 1dy need only be a direction heading from the burr 1c side to the rollover 1a side. If the steel material 10 is a sheet shape, the direction of propagation of the second crack 1dy may also be a direction running along the sheet thickness direction of the steel material 10 (direction perpendicular to first surface 10a and second surface 10b) or may be a direction inclined with respect to the sheet thickness direction. For example, if a clearance is provided between the first cutting blade 21 and the second cutting blade 22 when shearing the workpiece 5, the directions of propagation of the first crack 1dx and second crack 1dy may be directions inclined with respect to the sheet thickness direction. The larger the clearance, the greater the inclination possible.

The first crack 1dx need only propagate to the burr 1c side starting from the rollover 1a side and meet with the second crack 1dy at the burr 1c side. It is not necessarily required that it propagate by the shortest route from the rollover 1a side toward the second crack 1dy of the burr 1c side. For example, the first crack 1dx may propagate toward the front direction from the paper surface of FIG. 2B (if the steel material 10 is a sheet shape, for example, the sheet width direction) in the middle of propagating from the rollover 1a side to the burr 1c side. The same is true for the second crack 1dy as well.

At the sheared edge 1, the area ratio of the first part 1bx at the fractured surface 1b is larger than the area ratio of the second part 1by at the fractured surface 1b. In other words, at the sheared edge 1, the average length of the first crack 1dx propagating from the rollover 1a side toward the burr 1c side is longer than the average length of the second crack 1dy propagating from the burr 1c side toward the rollover 1a side. As explained above, if the area ratio of the part derived from the crack 1dx propagating from the rollover 1a side at the fractured surface 1b is larger than the area ratio of the part derived from the crack 1dx propagating from the burr 1c side, it is possible to relatively reduce the tensile residual stress of the fractured surface 1b.

Note that, in specifying the area ratios of the first part 1bx and second part 1by at the fractured surface 1b and the lengths of the first crack 1dx and second crack 1dy, the asperity of the surface of the fractured surface 1b is not considered. For example, as shown in FIG. 5, in the case of viewing the sheared edge 1 from the front, in the case of designating the position becoming the starting point of the first crack 1dx as P1, designating the position becoming the starting point of the second crack 1dy as P2, and designating the position where the first crack 1dx and the second crack 1dy meet as P3, if the distance between P1 and P3 is greater than the distance between P2 and P3, it is possible to judge that the area ratio of the first part 1bx at the fractured surface 1b is greater than the area ratio of the second part 1by at the fractured surface 1b.

According to the findings of the inventors, the greater the area ratio of the first part 1bx at the fractured surface 1b, the more the tensile residual stress of the fractured surface 1b is reduced. Specifically, in the steel material 10 of the present disclosure, the area ratio of the first part 1bx at the fractured surface 1b is 1.2 times or more, may be 1.5 times or more, may be 1.7 times or more, may be 2.0 times or more, may be 2.2 times or more, may be 2.5 times or more, may be 3.0 times or more, may be 3.5 times or more, may be 4.0 times or more, may be 4.5 times or more, or may be 5.0 times or more of the area ratio of the second part 1by at the fractured surface 1b.

Note that the burr 1c may be of a magnitude able to be visually discerned. For example, the presence of the burr 1e may also be observed by examining the sheared edge 1 by an electron microscope etc. Further, it is also possible to observe the rollover 1a to specifically determine the "rollover side" and "burr side" of the steel material 10. That is, the "burr side" referred to in the present application may also be specifically determined as the "opposite side to the rollover side". Regarding which of the first surface 10a and second surface 10b of the steel material 10 is the surface at the rollover 1a side and which is the surface at the burr 1c side, even if the burr 1c cannot be confirmed, the sides can be easily differentiated by examining the shape of the steel material 10.

At the sheared edge 1, the burnished surface 1e and the fractured surface 1b differ in properties. For example, the burnished surface 1e and the fractured surface 1b differ in roughness (glossiness). On this point, by just examining the appearance, it is possible to easily differentiate the burnished surface 1e and the fractured surface 1b. Further, the greater the ratio of the fractured surface 1b at the sheared edge 1, the greater the part where tensile residual stress should be reduced and the much better the effect which can be expected by the art of the present disclosure. In other words, it is preferable that the ratio of the fractured surface 1b at the edge of the steel material 10 be large. For example, the area ratio of the fractured surface 1b is preferably 50% or more based on the product of the cut length and cut thickness (sheet thickness) of the steel material 10 (cut length × sheet thickness) (100%), more preferably 55% or more, still more preferably 60% or more, particularly preferably 65% or more. The upper limit of the area ratio of the fractured surface 1b is not particularly limited. It may be 100% or may be 95% or less or 90% or less.

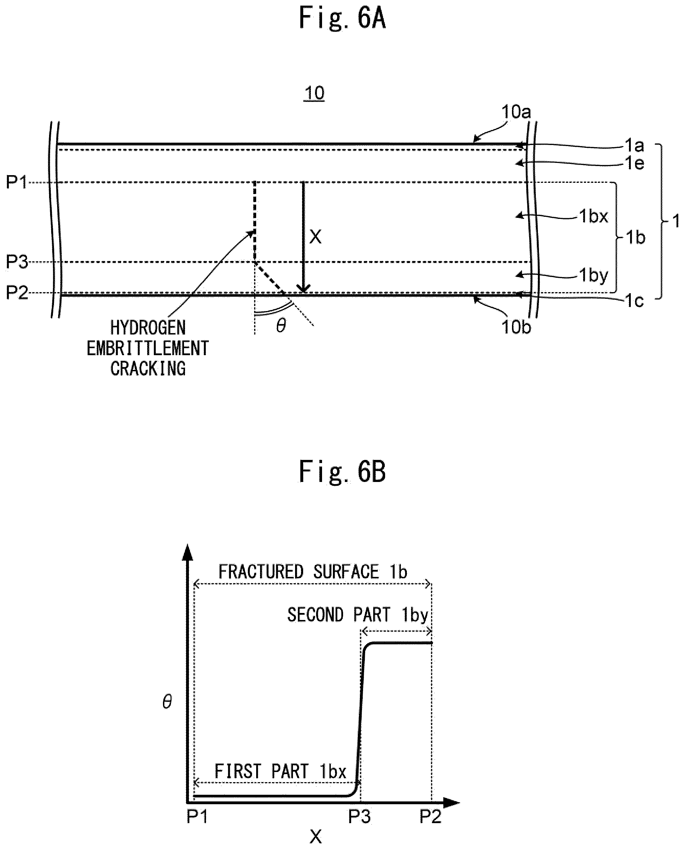

At the fractured surface 1b, the boundary between the first part 1bx and the second part 1by (position where the first crack 1dx and the second crack 1dy meet) can be discerned by, for example, introducing a large amount of hydrogen to the sheared edge 1. As explained above, the stress occurring during propagation of a crack depends on the direction of propagation of the crack. That is, as shown in FIGS. 6A and 6B, it can be said that the residual stress rapidly changes at the position where the first crack 1dx and the second crack 1dy meet. For this reason, the direction of hydrogen embrittlement cracking occurring due to penetration of hydrogen also rapidly changes at the position where the first crack 1dx and the second crack 1dy meet. Considering this, it is possible to deem the position where the orientation of hydrogen embrittlement cracking rapidly changes to be the position where the first crack 1dx and the second crack 1dy meet. The conditions for introduction of a large amount of hydrogen to the sheared edge 1 will be explained in detail at the following EXAMPLES.

2.2 Constitution Other Than Sheared Edge

The steel material 10 has a sheared edge 1 and the constitution other than the sheared edge is not particularly limited. The steel material 10, for example, may be a sheet shape or may be a rod shape. If the steel material 10 is a sheet shape, the sheet thickness may, for example, be 0.8 mm or more and may be 5.0 mm or less or 3.0 mm or less. Further, if the steel material 10 is a rod shape, the cross-sectional shape is not particularly limited. For example, it may be a circular shape or may be a polygonal shape. The circle equivalent diameter of the cross-section may be 5 mm or more and may be 100 mm or less. Furthermore, the steel material 10 may be one which is formed into some sort of shape by bending etc. while leaving a sheared edge 1.

As shown in FIG. 4, the steel material 10 may be provided with a first surface 10a and a second surface 10b at the opposite side to the first surface 10a as surfaces other than the sheared edge 1. The first surface 10a and the second surface 10b may be connected through the sheared edge 1. The first surface 10a and the second surface 10b may be parallel with each other. Note that, the "parallel" referred to in the present application is not limited to strictly parallel and may also be substantially parallel. That is, even when the first surface 10a and the second surface 10b are not strictly parallel, they are deemed parallel if within the range of error allowed in industrial production. Specifically, if the angle formed by the first surface 10a and the second surface 10b is 0°±1°, that first surface 10a and second surface 10b are deemed parallel.

On the surface of the steel material 10, a surface treated layer may be formed. As the surface treated layer, a plating layer, coating layer, etc. may be mentioned. Further, the steel material 10 may include a plurality of layers of different types of steel. For example, as the steel material 10, clad steel can also be employed. Further, the steel material 10 may also be obtained by shearing a workpiece after cold pressing or other cold working or a workpiece after hot stamping or other hot working.

2.3 Mechanical Properties

The mechanical properties of the steel material 10 are not particularly limited and can be suitably determined in accordance with the application of the steel material 10. The steel material 10 having the sheared edge 1 can be reduced in tensile residual stress at the fractured surface 1b regardless of the mechanical properties. However, problems such as a drop in the hydrogen embrittlement resistance due to the tensile residual stress occur particularly easily in high strength steel materials. On this point, the tensile strength of the steel material 10 is preferably 980 MPa or more, more preferably 1180 MPa or more, particularly preferably 1470 MPa or more. The upper limit of the tensile strength of the steel material 10 is not particularly prescribed, but, for example, may be 2500 MPa or less, may be 2200 MPa or less, or may be 2000 MPa or less. Further, the "tensile strength" of the steel material referred to in the present application is based on ISO 6892-1: 2009. Further, the higher the strength of the steel material 10, the greater the ratio of the fractured surface 1b at the sheared edge 1, that is, the larger the part where the tensile residual stress should be reduced, and the better the effect due to the art of the present disclosure. The preferable area ratio of the fractured surface 1b is as explained above.

2.4 Chemical Composition

The chemical composition and metallographic structure of the steel material 10 are not particularly limited and can be suitably determined in accordance with the application of the steel material 10. The steel material 10 having the sheared edge 1 can be reduced in tensile residual stress at the fractured surface 1b regardless of the chemical composition and metallographic structure. As one example of the chemical composition, the steel material 10 of the present disclosure may have a chemical composition comprising, by mass%, C: 0.050 to 0.800%, Si: 0.01 to 3.00%, Mn: 0.01 to 10.00%, Al: 0.001 to 0.500%, P: 0.100% or less, S: 0.050% or less, N: 0.010% or less, Cr: 0 to 3.000%, Mo: 0 to 1.000%, B: 0 to 0.0100%, Ti: 0 to 0.500%, Nb: 0 to 0.500%, V: 0 to 0.500%, Cu: 0 to 0.50%, Ni: 0 to 0.50%, O: 0 to 0.020%, W: 0 to 0.100%, Ta: 0 to 0.10%, Co: 0 to 0.50%, Sn: 0 to 0.050%, Sb: 0 to 0.050%, As: 0 to 0.050%, Mg: 0 to 0.050%, Ca: 0 to 0.050%, Y: 0 to 0.050%, Zr: 0 to 0.050%, La: 0 to 0.050%, Ce: 0 to 0.050%, and a balance of Fe and impurities. Further, in the chemical composition of the steel material 10, the lower limits of contents of the optionally added elements of Cr, Mo, B, Ti, Nb, V, Cu, Ni, O, W, Ta, Co, Sn, Sb, As, Mg, Ca, Y, Zr, La, and Ce may be 0.0001% or 0.001%.

2.5 Function and Effect

As explained above, the steel material 10 of the present disclosure can be reduced in tensile residual stress at particularly the fractured surface 1b at the sheared edge 1. By the tensile residual stress of the fractured surface 1b being reduced, for example, the hydrogen embrittlement resistance, fatigue strength, etc. at the sheared edge 1 can be improved.

3. Auto Part

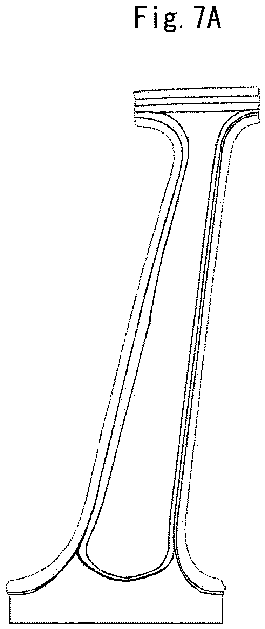

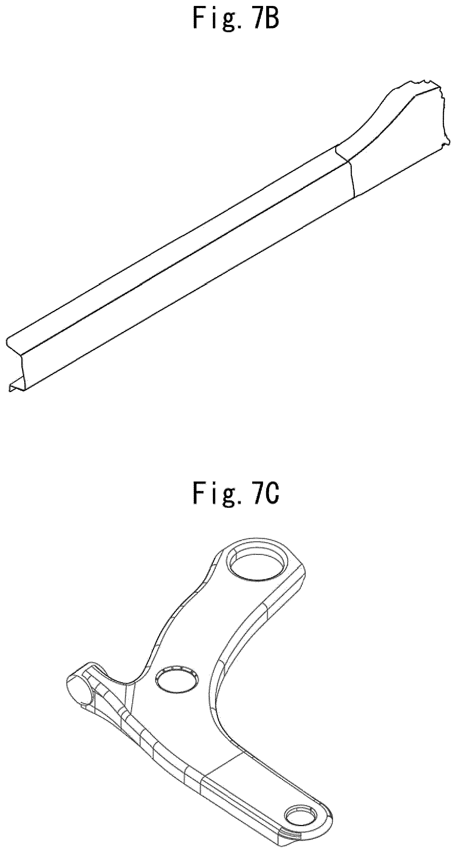

The auto part of the present disclosure has the above steel material 10. As a specific example of an auto part to which the steel material 10 is applied, for example, a frame part or chassis part etc. of an automobile may be mentioned. As a frame part, a center pillar (B pillar) such as shown in FIG. 7A, a side sill such as shown in FIG. 7B, etc. may be mentioned. As chassis parts, a lower arm etc. such as shown in FIG. 7C may be mentioned. As explained above, even when the steel material 10 of the present disclosure is, for example, high strength steel material with a tensile strength of 980 MPa or more, hydrogen embrittlement cracking (delayed fracture) etc. at the sheared edge 1 are hard to occur. On this point, the auto part of the present disclosure may be provided, at least partially, with a steel material 10 as sheared (steel material 10 at least partially not further cold worked at the sheared edge 1 after shearing or steel material 10 at least partially as sheared after cold pressing or other cold working or after hot stamping or other hot working). Whether the auto part is provided with the steel material of the present disclosure 10 can be judged, as explained above, by introducing a large amount of hydrogen into the sheared edge of the auto part and examining the direction of hydrogen embrittlement cracking occurring due to penetration of hydrogen.

4. Shearing Apparatus

The steel material 10 having the sheared edge 1, as explained above, can be produced by controlling the directions of propagation or lengths of the cracks 1dx, 1dy at the time of shearing. For example, as shown in FIGS. 1A to 1D and FIGS. 2A to 2C, considered is the case of using the first cutting blade 21 and second cutting blade 22 to shear off one part of the workpiece 5 and remove it as scrap 15 and use the remaining part of the workpiece 5 as the steel material 10 as the target. In this case, the steel material 10 having the above predetermined sheared edge 1 is obtained by making the first crack 1dx propagate with priority from the first cutting blade 21 side. Further, to make the shearing of the workpiece 5 easier, when placing the workpiece 5 between the first cutting blade 21 and the second cutting blade 22, it is also possible to use a not shown holding member (holder) to press the workpiece 5 against the first bottom surface 21a or the second bottom surface 22a. The form of the holder is not particularly limited. A general one may be employed.

As the method for making the first crack 1dx propagate on a priority basis from the first cutting blade 21 side, various methods may be considered. For example, it is possible to increase the friction coefficient of the front end part of the first cutting blade 21. Details will be explained later as the first embodiment of the shearing apparatus. Further, if at least one of the first cutting blade 21 and the second cutting blade 22 is rounded at the edges or chamfered, etc. at its front end, the first cutting blade 21 and the second cutting blade 22 can be changed in shapes of the front end parts. In this case, the shapes of the front end parts may be adjusted in accordance with the shear angle $\alpha$. Specifically, this will be explained later as a second embodiment of the shearing apparatus.

Further, to make the first crack 1dx propagate on a priority basis from the first cutting blade 21 side, in addition to specially modifying the shearing apparatus side, the workpiece side can also be specially modified. For example, raising the friction coefficient of the first surface 10a of the workpiece 5 may be considered. Alternatively, it may also be considered to employ a material where a crack easily forms at the first surface 10a side of the workpiece 5. Specifically, to facilitate the formation of a crack at the first surface 10a side compared with the second surface 10b side, it is possible to make the hardness of the first surface 10a side of the workpiece 5 higher than the hardness of the second surface 10b side. Alternatively, it is also possible to impart strain etc. to the first surface 10a side of the workpiece 5 in advance before shearing so as to facilitate cracking of the first surface side.

## 4.1 First Embodiment

A shearing apparatus increasing the friction coefficient of the front end part of the first cutting blade 21 over the friction coefficient of the front end part of the second cutting blade 22 so as to cause the first crack 1dx to propagate with priority from the first cutting blade 21 side will be explained in detail.

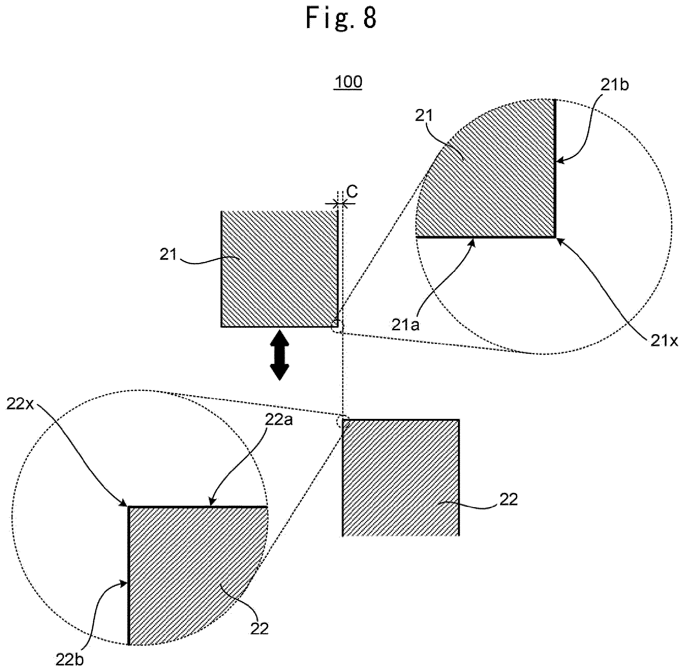

As shown in FIG. 8, the shearing apparatus 100 according to the first embodiment has a first cutting blade 21 and a second cutting blade 22,

the first cutting blade 21 and the second cutting blade 22 are configured to be able to move relative to each other,
the first cutting blade 21 has a first bottom surface 21a, a first side surface 21b, and a first front end part 21x,
the second cutting blade 22 has a second bottom surface 22a, a second side surface 22b, and a second front end part 22x, and
a friction coefficient of the first front end part 21x is 1.2 times or more of a friction coefficient of the second front end part 22x.

## 4.1.1 First Cutting Blade

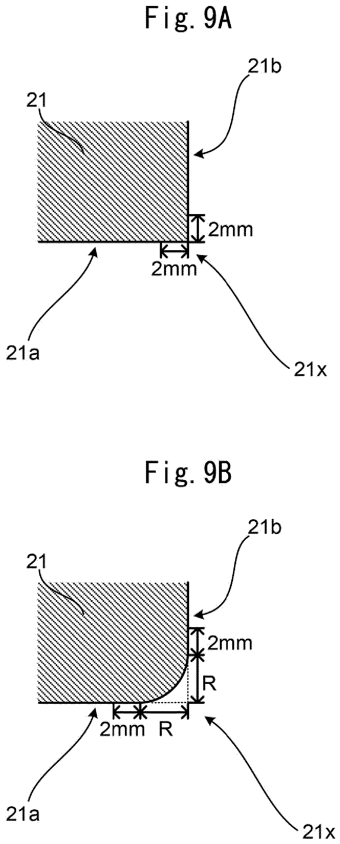

The first cutting blade 21 has a first bottom surface 21a, a first side surface 21b, and a first front end part 21x. The first bottom surface 21a may have a surface intersecting the direction of relative movement of the first cutting blade 21 and may have a surface perpendicular to the direction of movement. Further, the first side surface 21b may have a surface running along the direction of relative movement of the first cutting blade 21 and may have a surface inclined with respect to the direction of movement. Further, the first front end part 21x refers to the part near the intersection line of the first bottom surface 21a and the first side surface 21b. Specifically, as shown in FIG. 9A, it refers to the part in the range of 2 mm from the intersection line of the first bottom surface 21a and the first side surface 21b toward both the first bottom surface 21a side and the first side surface 21b side. If the front end of the first cutting blade 21 is rounded or the front end is chamfered, the intersection line of the surface extending along the first bottom surface 21a and the surface extending along the first side surface 21b is visualized and the part included in the range of R+2 mm from the intersection line to both the first bottom surface 21a side and first side surface 21b side is deemed the first front end part 21x (see FIG. 9B). It is possible to specifically determine the first front end part 21x in the same way if the front end of the first cutting blade 21 is chamfered etc.

Further, in FIG. 9B, for convenience in explanation, the rounded part R is intentionally shown larger, but the usual rounded part is smaller than that shown in FIG. 9B. The rounded part R of the front end of the first cutting blade 21 may, for example, be 0.02 mm or more.

The shape of the first bottom surface 21a can be determined in accordance with the shape of the sheared edge 1 of the steel material 10 of the target workpiece. Whatever the shape, the desired effect can be exhibited if the coefficient of friction at the first front end part 21x is relatively large. The first bottom surface 21a may have a flat surface or a curved surface. That flat surface or curved surface can face the first surface 10a at the time of shearing of the workpiece 5.

The shape of the first side surface 21b can be determined in accordance with the shape of the sheared edge 1 of the steel material 10 of the target workpiece. Whatever the shape, the desired effect can be exhibited if the coefficient of friction at the first front end part 21x is relatively large. The first side surface 21b may have a flat surface or a curved surface. That flat surface or curved surface may also be combined.

The first front end part 21x may extend straight or extend curved toward the longitudinal direction of the first cutting blade 21 (direction toward the rear from the paper surface of FIG. 8). It may be determined in accordance with the shape of the sheared edge 1 of the steel material 10 of the target workpiece. If punching a hole in the workpiece 5, the shape of the first front end part 21x can become a ring shape running along the edges of the punched hole.

In the standby state before shearing, the first cutting blade 21 may be placed above the second cutting blade 22. In this case, the first cutting blade 21 may be a punch which punches out one part of the workpiece 5 placed on the second bottom surface 22a of the second cutting blade 22 from the top to the bottom.

The first cutting blade 21 is comprised of a material generally used for a cutting blade provided at a shearing apparatus. For example, the first cutting blade 21 may also be comprised of SKD11. Further, as explained later, the first cutting blade 21 may have a first coating on its surface.

4.1.2 Second Cutting Blade

The second cutting blade 22 has a second bottom surface 22a, a second side surface 22b, and a second front end part 22x. The second bottom surface 22a may have a surface intersecting the direction of relative movement of the second cutting blade 22 and may have a surface perpendicular to the direction of movement. Further, the second side surface 22b may have a surface running along the direction of relative movement of the second cutting blade 22 and may have a surface inclined with respect to the direction of movement. Further, the second front end part 22x refers to the part near the intersection line of the second bottom surface 22a and the second side surface 22b and is specifically determined in the same way as the first front end part 21x. That is, it refers to the part in a range of 2 mm from the intersection line of the second bottom surface 22a and the second side surface 22b toward both the second bottom surface 22a side and second side surface 22b side (FIG. 9A). If the front end of the second cutting blade 22 is rounded or the front end is chamfered, the intersection line of the surface extending along the second bottom surface 22a and the surface extending along the second side surface 22b is visualized and the part included in the range of R+2 mm from the intersection line to both the second bottom surface 22a side and second side surface 22b side is deemed the second front end part 22x. In the same way as the case where the front end of the second cutting blade 22 is chamfered, the second front end part 22x can be specifically determined. Further, the rounded part of the front end of the second cutting blade 22 may, for example, be 0.05 mm or more. Further, the rounded part of the front end of the second cutting blade 22 may be larger than the rounded part of the front end of the first cutting blade 21.

The shape of the second bottom surface 22a can be determined in accordance with the shape of the sheared edge 1 of the steel material 10 of the target workpiece. Whatever the shape, the desired effect can be exhibited if the coefficient of friction at the second front end part 22x is relatively small. The second bottom surface 22a may have a flat surface or a curved surface. That flat surface or curved surface can face the second surface 10b at the time of shearing of the workpiece 5.

The shape of the second side surface 22b can be determined in accordance with the shape of the sheared edge 1 of the steel material 10 of the target workpiece. Whatever the shape, the desired effect can be exhibited if the coefficient of friction at the second front end part 22x is relatively small. The second side surface 22b may have a flat surface or a curved surface. That flat surface or curved surface may also be combined.

The second front end part 22x may extend straight or extend curved toward the longitudinal direction of the second cutting blade 22 (direction toward the front from the paper surface of FIG. 8). It may be determined in accordance with the shape of the sheared edge 1 of the steel material 10 of the target workpiece. If punching a hole in the workpiece 5, the shape of the second front end part 22x can become a ring shape running along the edge of the punched hole.

In the standby state before shearing, the second cutting blade 22 may be placed below the first cutting blade 21. In this case, the second cutting blade 22 may be a die on which the workpiece 5 is placed.

The second cutting blade 22 is comprised of a material generally used for a cutting blade provided at a shearing apparatus. For example, the second cutting blade 22 may also be comprised of SKD11. The material of the second cutting blade 22 may be the same or different from the material of the first cutting blade 21. Further, as explained later, the second cutting blade 22 may have a second coating on its surface.

4.1.3 Friction Coefficient of Front End Part

At the shearing apparatus 100, it is important that the friction coefficient of the first front end part 21x be 1.2 times or more of the friction coefficient of the second front end part 22x. Due to this, it becomes easier to make the first crack 1dx propagate earlier than the second crack 1dy. According to the findings of the inventors, the greater the friction coefficient of the first front end part 21x compared to the friction coefficient of the second front end part 22x, the easier it is to make the first crack 1dx propagate. The friction coefficient of the first front end part 21x may also be 1.3 times or more, 1.4 times or more, 1.5 times or more, 1.6 times or more, 1.7 times, or 1.8 times or more, 1.9 times or more, 2.0 times or more, 2.1 times or more, 2.2 times or more, 2.3 times or more, 2.4 times or more, or 2.5 times or more of the friction coefficient of the second front end part. The upper limit of the ratio of the friction coefficient is not particularly limited. For example, the friction coefficient of the first front end part 21x may be 10.0 times or less, may be 8.0 times or less, or may be 6.0 times or less of the friction coefficient of the second front end part. The difference between the friction coefficient of the first front end part 21x and the friction coefficient of the second front end part 22x may also be, for example, 0.05 or more, may be 0.10 or more, may be 0.15 or more, or may be 0.20 or more. The specific values of the friction coefficient of the first front end part 21x and the friction coefficient of the second front end part 22x may be, for example, in the range of 0.01 or more and 3.0 or less.

The friction coefficients of the first front end part 21x and the second front end part 22x are measured as follows by a pin-on-disk device. The friction coefficients of the first front end part 21x and the second front end part 22x are measured in the state removing the liquid lubricant. The material of the pin of the pin-on-disk device is SKD11 (corresponding to HRC58 to 60). The diameter of the pin is $\phi$0.71 cm ($0.357 \times 0.357 \times \pi$=0.4 cm$^2$ (0.9 MPa at 29.4kN)). The load is 29.4kN. The measurement conditions are running the pin on the front end parts 21x, 22x by linear motion (moving the pin so as always slide on a newly formed surface) at a speed of 30 mm/sec on the front end parts 21x, 22x. The scanning time is 7 seconds (movement distance 30 mm/sec × 7 seconds). The average value of the measurement values other than the initial 1 second and the last 1 second is found and this used as the coefficient of dynamic friction. The coefficients of dynamic friction are found in the above way at three different locations at the front end parts 21x, 22x and the average value is regarded as the friction coefficients of the front end parts 21x, 22x. Further, at parts which can be deemed the same extents of friction coefficient as the front end parts 21x, 22x (for example, the side surfaces 21b, 22b), the above method of measurement may be used to measure the friction coefficients. As cases where the friction coefficients of the front end parts 21x, 22x cannot be deemed the same extent, for example, the case where the types of coatings change, the case where the coating thickness changes by 1.5 times or more, the case where the surface roughness changes by 1.5 times or more, etc. may be mentioned.

As the method for making the friction coefficient of the first front end part 21x larger by 1.2 times or more of the friction coefficient of the second front end part 22x, various methods may be considered. For example, they include the following.

(1) Coating

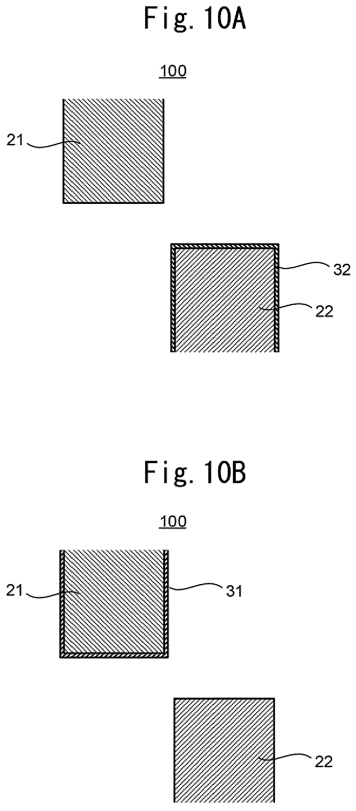

As shown in FIG. 10A, at the shearing apparatus 100, the second front end part 22x may be given a second coating 32. The second coating 32 may also be given at a part other than and in addition to the second front end part 22x. For example, it may be given to part or all of the second bottom surface 22a of the second cutting blade 22 and may be given to part or all of the second side surface 22b. The second coating 32 may have not only the function of protecting the surface of the second cutting blade 22, but also the function of relatively reducing the coefficient of friction of the second front end part 22x of the second cutting blade 22, or may not have the functions. The second coating 32 can employ a known coating as a coating given to the shearing tool. The second coating 32 may be an inorganic coating. Specifically, it may be a coating containing at least a compound selected from TiC, TiN, TiCN, Cr, CrN, CrSiN, and DLC.

As shown in FIG. 10B, in the shearing apparatus 100, the first front end part 21x may also be given a first coating 31. The first coating 31 may be given to other parts in addition to the first front end part 21x, for example, may be given to part or all of the first bottom surface 21a of the first cutting blade 21 or may be given to part or all of the first side surface 21b. The first coating 31 may have, in addition to the function of protecting the surface of the first cutting blade 21, a function of making the friction coefficient of the first front end part 21x of the first cutting blade 21 relatively increase, or may not have the same. For the first coating 31, a coating known as a coating to be applied to a shearing tool can be employed. The first coating 31 may be an inorganic coating, specifically at least one type selected from TiC, TiN, TiCN, Cr, CrN, CrSiN, and DLC. The first coating 31 and the second coating 32 may be the same type or may be different types.

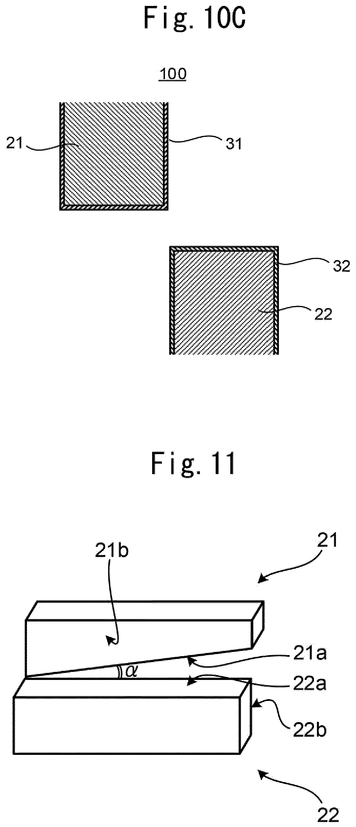

As shown in FIG. 10C, at the shearing apparatus 100, the second front end part 22x may be given a second coating 32 and the first front end part 21x may be given the first coating 31. In this case, the peeling life of the second coating 32 may be longer than the peeling life of the first coating 31. Along with use of the shearing apparatus 100, a coating with a short peeling life more easily becomes rougher at the surface than a coating with a long peeling life. That is, a coating with a short peeling life easily increases in friction coefficient compared with a coating with a long peeling life. In this way, by employing as the first coating 31 at the first cutting blade 21 side a coating with a short peeling life, the friction coefficient at the first front end part 21x may be intentionally made to increase. In other words, from the viewpoint of making the friction coefficient increase, the peeled off area of the first coating 31 at the first cutting blade 21 may be made greater. For example, the peeled off area of the first coating 31 is preferably 40% or more, 50% or more, or 60% or more of the total area (total of coated part and peeled off part at the first front end part 21x). On the other hand, as the second coating 32 at the second cutting blade 22 side, a coating with a long peeling life may be used. In this case, the peeled off area of the second coating 32 may be as small as possible. From the viewpoint of suppressing variation of the properties of the sheared edge, for example, the peeled off area of the second coating 32 is preferably less than 10% of the total area (total of coated part and peeled off part at the second front end part 22x).

Further, the "peeling life" of the coating provided at the front end part is specifically determined as follows. That is, an optical microscope is used to capture the front end part and the range of peeling of the coating is specifically determined. At this time, at the region contained at the front end part, the time until 10% or more of the area of the coating peels off is defined as the peeling life.

As explained above, the friction coefficient of the first front end part 21x can be made larger by 1.2 times of the friction coefficient of the second front end part 22x by adjusting the presence or absence of the coating, the type of the coating, the surface properties of the coating, etc. Further, the "coating" referred to in the present application means a solid coating formed at a front end part.

(2) Surface Roughness

Regardless of the presence or absence of a coating, the surface roughness of the front end part can be adjusted to adjust the friction coefficient of the front end part. On this point, at the shearing apparatus 100, the surface roughness of the first front end part 21x may be larger than the surface roughness of the second front end part 22x. The method of making the surface roughness of the first front end part 21x relatively increase is not particularly limited. Mechanical polishing, roughening or flattening using a chemical, transfer by a roll with surface relief, shot peening, and other various methods may be mentioned.

The "surface roughness" of the first front end part 21x and the second front end part 22x means the Rz measured as follows: That is, a stylus type tester is used to measure the shape of the cutting blade by moving the stylus from the bottom surface of the cutting blade toward the side surface of the cutting blade so as to include the front end part and calculate the Rz of the front end part of the cutting blade. In measurement, a stylus comprised of diamond with a tip radius of 2 $\mu$m is used. The measurement force is 0.75 mN and the measurement speed is 0.15 mm/s. Similar measurement is performed at three locations and the average taken. Here, the measurement length of Rz is 2 mm each per location.

4.1.4 Other Constitutions

(1) Clearance

As shown in FIG. 8, the shearing apparatus 100 may have a clearance C between the first cutting blade 21 and the second cutting blade 22. The clearance C can be suitably determined in accordance with the material, shape, etc. of the workpiece 5. For example, if the workpiece 5 is a plate shape, the clearance C may be 5% or more of the sheet thickness and may be 25% or less of the sheet thickness. Further, the "clearance" referred to in the present application is based on ISO 16630: 2009.

(2) Shear Angle

As shown in FIG. 11, the shearing apparatus 100 may have a shear angle $\alpha$ between the first cutting blade 21 and the second cutting blade 22. The shear angle $\alpha$ can be suitably determined in accordance with the material, shape, etc. of the workpiece 5. For example, the shear angle $\alpha$ may be 0° or more or 0.5° or more and may be 10° or less. Further, according to new findings of the inventors, if the shear angle is 0° or more and 1° or less, the first crack 1dx is more easily made to propagate at the workpiece 5 before the second crack 1dy.

(3) Movement Device

The shearing apparatus 100 is provided with a movement device in general use as a component of the shearing apparatus 100 in addition to the first cutting blade 21 and second cutting blade 22. As explained above, in the shearing apparatus 100, the first cutting blade 21 and the second cutting blade 22 are configured to be able to move relative to each other. For example, as shown by the two-headed black arrow in FIG. 8, the first cutting blade 21 may be configured to be able to move up and down so as to make the first cutting blade 21 approach and move away from the second cutting blade 22. Alternatively, the second cutting blade 22 may be configured to be able to move or both the first cutting blade 21 and second cutting blade 22 may be configured to be able to move. The relative movement of the first cutting blade 21 and second cutting blade 22 may be performed by a known movement device (not shown) able to be built into the shearing apparatus. Alternatively, at least one of the first cutting blade 21 and second cutting blade 22 may be configured to be able to be moved manually by hand. The movement device will be explained in more detail in the second embodiment.

(4) Holding Member (Holder)

The shearing apparatus 100 may also be provided with a not shown holding member (holder) pressing the workpiece 5 against the first bottom surface 21a or second bottom surface 22a. That is, the shearing apparatus 100 may have a holding member facing the first cutting blade 21 and may have a holding member facing the second cutting blade 22. The form of the holding member is not particularly limited. A general holding member may be employed. The holding member (holder) will be explained in more detail in the second embodiment.

4.2 Second Embodiment

An embodiment specially modifying the shape of the first front end part 21x of the first cutting blade 21 and the shape of the second front end part 22x of the second cutting blade 22 so as to make the first crack 1dx propagate with priority from the first cutting blade 21 side will be explained in detail. In this case, the shapes of the front end parts may be determined in accordance with the shear angle $\alpha$

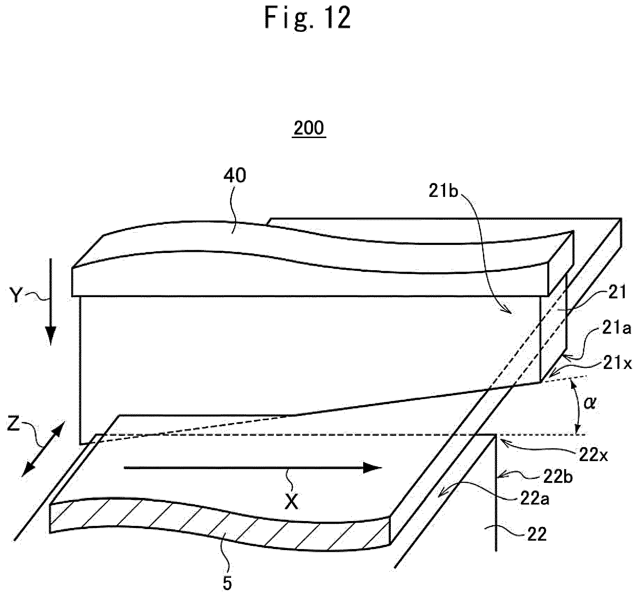

As shown in FIG. 12 to 19, the shearing apparatus according to the second embodiment has a first cutting blade 21 and a second cutting blade 22,

the first cutting blade 21 and the second cutting blade 22 are configured to be able to move relative to each other, the first cutting blade 21 has a first bottom surface 21a, a first side surface 21b, and a first front end part 21x, the first front end part 21x includes at least one of

a first inclined surface 21y inclined with respect to the first bottom 21a and
a first curved surface 21z,

the second cutting blade 22 has a second bottom surface 22a, a second side surface 22b, and a second front end part 22x,
the second front end part 22x includes at least one of

a second inclined surface 22y inclined with respect to the second bottom surface 22a and
a second curved surface 22z,

a shear angle $\alpha$ is formed between the first front end part 21x and the second front end part 22x,
$\Delta$CT calculated based on the following formulas (1) to (4) satisfies the relationship of

$$(0.15 \times \alpha^2 + 0.05 \times \alpha + 1) < \Delta CT \leq 40$$

$$\Delta CT = \Delta CA + \Delta CB \ \dots(1)$$

$$\Delta CA = C2 - C1 \ \dots(2)$$

$$\Delta CB = 80 \times \Delta R \ \dots(3)$$

$$\Delta R = R2 - R1 \ \dots(4)$$

where,

C1 [°] is a smaller angle which the first inclined surface forms with the first bottom surface,
C2 [°] is a smaller angle which the second inclined surface forms with the second bottom surface,
R1 [mm] is a radius of curvature of the first curved surface, and
R2 [mm] is a radius of curvature of the second curved surface.

In the above way, in the second embodiment, the first front end part 21x and second front end part 22x are configured so that the sum of $\Delta$CA and $\Delta$CB, that is, $\Delta$CT, satisfies the relationship

$$(0.15 \times \alpha^2 + 0.05 \times \alpha + 1) < \Delta CT \leq 40$$

If using such a shearing apparatus to cut the workpiece 5, the cutting edge of the second cutting blade 22 can be kept from biting into the workpiece 5 at the time of shearing. Further, at the workpiece 5, propagation of a crack from the first cutting blade 21 side is promoted and propagation of a crack from the second cutting blade 22 side is suppressed, so the distance of propagation of a crack from the second cutting blade 22 side can be shortened or made zero.

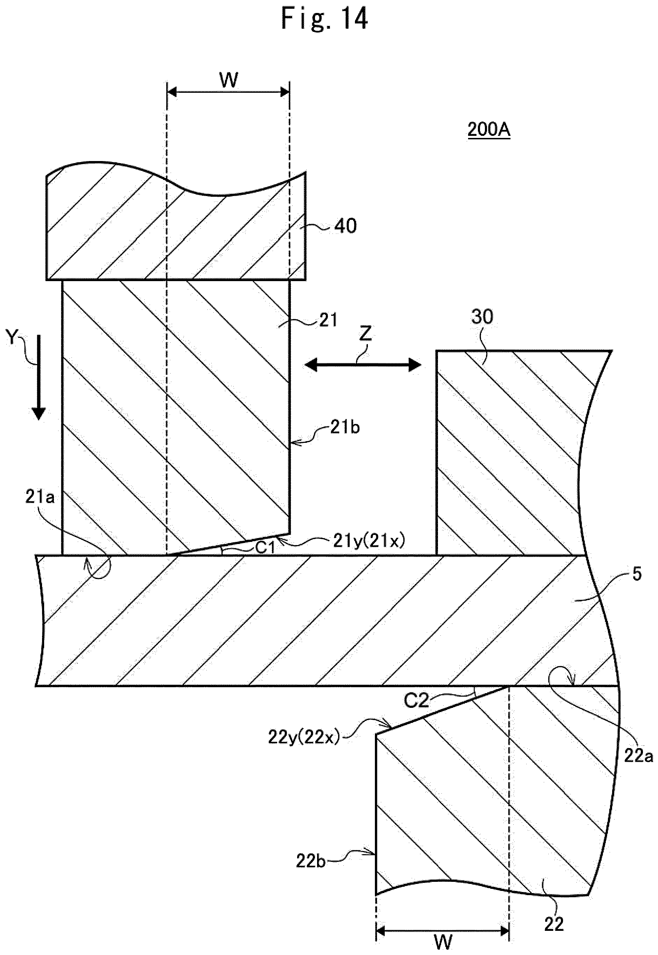

As shown in FIGS. 12 to 19, the punch of the first cutting blade 21 may be the top cutting blade of the shearing apparatus 200. The first cutting blade 21 has a first bottom surface 21a, first side surface 21b, and first front end part 21x positioned between the first bottom surface 21a and the first side surface 21b. Here, the first bottom surface 21a can contact one surface of the workpiece 5 (top surface in FIG. 14). The first bottom surface 21a may be substantially horizontal. The first side surface 21b may also be substantially vertical. The first side surface 21b is connected with the first bottom surface 21a through the first front end part 21x. The first front end part 21x, like the later explained second front end part 22x, may also extend straight along the direction X running along the length of the sheared edge of the workpiece 5. All of the region from one end to the other end of the first front end part 21x may be able to function as a cutting edge.

As shown in FIGS. 12 to 19, the die of the second cutting blade 22 may be the bottom cutting blade of the shearing apparatus 200. The second cutting blade 22 has a second bottom surface 22a, second side surface 22b, and second front end part 22x positioned between the second bottom surface 22a and the second side surface 22b. Here, the second bottom surface 22a can contact the other surface of the workpiece 5 (bottom surface in FIG. 14). The second bottom surface 22a may be substantially horizontal. The second side surface 22b may also be substantially vertical. The second side surface 22b is connected with the second bottom surface 22a through the second front end part 22x. The second front end part 22x, like the above explained first front end part 21x, may also extend straight along the direction X running along the length of the sheared edge of the workpiece 5. All of the region from one end to the other end of the second front end part 22x may be able to function as the cutting edge.

As shown in FIGS. 12 to 19, the holder 30 may be provided above the die of the second cutting blade 22 and support the workpiece 5 by sandwiching it against the second bottom surface 22a of the second cutting blade 22 (see FIG. 14). As shown in FIG. 14, the first cutting blade 21 and second cutting blade 22 are able to be arranged through a fixed clearance along the direction Z at which the first side surface 21b and holder 30 face each other (left-right direction in FIG. 14). Note that, in the second embodiment as well, in the same way as the first embodiment, the holder 30 is not essential.

As shown in FIG. 12 to 19, a movement device 40 may, for example, be provided at the top side of the punch used as the first cutting blade 21. The movement device 40 is, for example, realized by an electric motor, hydraulic mechanism, etc. Illustration of each is omitted, but the movement device 40 may also be provided with a drive device, speed control device, etc. The movement device 40, for example, may be one which can move the first front end part 21x of the first cutting blade 21 along the thickness direction of the steel sheet used as the workpiece 5 between the position where the first side surface 21b of the first cutting blade 21 faces the holder 30 and the position where the first side surface 21b faces the second side surface 22b of the second cutting blade 22. That is, the apparatus may also be configured so that the movement device 40 is used to make the first cutting blade 21 and the second cutting blade 22 relatively move. The first front end part 21x and the second front end part 22x can approach each other and separate from each other. In the second embodiment, the thickness direction of the steel sheet used as the workpiece 5 is defined as the "direction of movement Y". Further, in the second embodiment, in the same way as the first embodiment, the movement device 40 is not essential. The apparatus may also be configured to enable the first cutting blade 21 and the second cutting blade 22 to be moved manually.

Note that, in the present disclosure, the first front end part 21x and second front end part 22x need only relatively move so that they approach or move apart from each other. For example, the direction of relative movement Y is not limited to the case where the first cutting blade 21 is pushed out toward the second cutting blade 22. The movement device 40 may be provided at the second cutting blade 22 side, and the second cutting blade 22 may be pushed out toward the first cutting blade 21. Alternatively, movement devices 40 may be provided at both sides of the first cutting blade 21 side and second cutting blade 22 side.

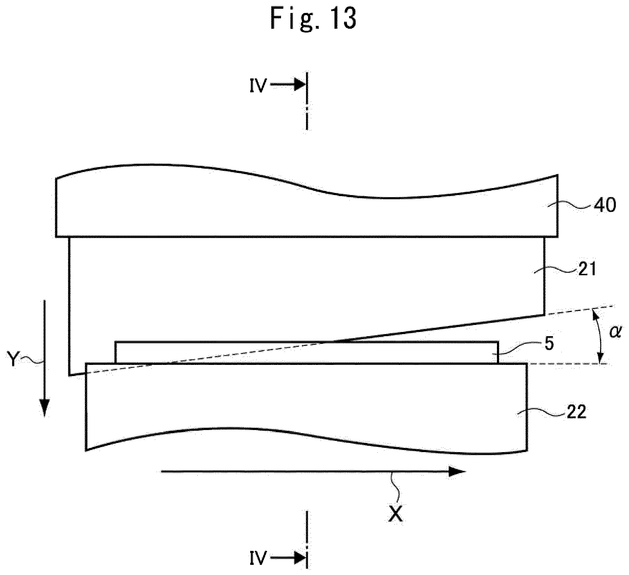

As shown in FIG. 13, in the shearing apparatus 200, the first cutting blade 21 and second cutting blade 22 are arranged so that a certain shear angle $\alpha$ is formed between the first front end part 21x of the first cutting blade 21 and the second front end part 22x of the second cutting blade 22. By performing shearing in the state where the shear angle $\alpha$ is formed, the maximum value of the load required for the work is lightened and the burden on the shearing apparatus 200 is decreased. Further, as the first front end part 21x descends in the direction of relative movement Y, the contact position of the first front end part 21x and the workpiece 5 (shearing position) moves to the right side along the direction X in FIG. 12 and FIG. 13.

The specific value of the shear angle $\alpha$ is not particularly limited. In the second embodiment, the shear angle $\alpha$ is preferably 0.5° or more and 10° or less (0.5°≤$\alpha$≤10°). If the shear angle $\alpha$ is too small, depending on the load restrictions of the press machine (shearing apparatus), shearing may be difficult. Further, if the shear angle $\alpha$ is too large, the characteristics of the edge such as the post-workability may deteriorate.

Further, if the range of the shear angle $\alpha$ is 1° or more and 5° or less, the load can be effectively reduced and the characteristics of the edge are maintained, so it is more preferably (1°≤$\alpha$≤5°).

In the second embodiment, if shearing a steel sheet as the workpiece 5, the clearance between the first cutting blade 21 and the second cutting blade 22 is preferably 5% or more and 25% or less of the thickness of the steel sheet. If the clearance is too narrow, a secondary burnished surface is liable to be formed at the edge of the steel sheet after shearing and the ductility is liable to fall. Further, if the clearance is too broad, the burr attached to the edge by the shearing is formed relatively large and the burden for removing the burr in the later steps is liable to become larger. Further, to safely secure the high ductility of the edge while reducing the probability of formation of a burr, the clearance is preferably in a range of 10% or more and 20% or less of the thickness of the steel sheet.

In the second embodiment, the first front end part 21x includes at least one of the first inclined surface 21y inclined with respect to the first bottom surface 21a and the first curved surface 21z while the second front end part 22x includes at least one of the second inclined surface 22y inclined with respect to the second bottom surface 22a and the second curved surface 22z. Further, viewed along the direction X along the length of the sheared edge, the smaller angle formed by the first inclined surface 21y with the first bottom surface 21a, that is, the inclination angle C1 [°], is subtracted from the smaller angle formed by the second inclined surface 22y with the second bottom surface 22a, that is, the inclination angle C2 [°], to calculate the first difference of inclination angle $\Delta$CA.

$$\Delta CA = C2 - C1 \;\ldots(2)$$

Further, the radius of curvature R1 [mm] of the first curved surface 21z is subtracted from the radius of curvature R2 [mm] of the second curved surface 22z to calculate the difference of radius of curvature $\Delta$R [mm] (following formula (4)). Further, the second difference of inclination angle $\Delta$CB is calculated from the difference of radius of curvature $\Delta$R based on the following formula (3):

$$\Delta CB = 80 \times \Delta R \;\ldots(3)$$

$$\Delta R = R2 - R1 \;\ldots(4)$$

Formula (3) is a formula for conversion introduced for treating the difference of radius of curvature of the curved surface as equal to the difference of inclination angle. For example, the second difference of inclination angle $\Delta$CB in the case of the difference of radius of curvature $\Delta$R being 0.1 mm is 8° according to formula (3). Formula (3) is set considering the results of X-ray measurement of the tensile residual stress of the edge of the product obtained by shearing using the shearing apparatus (steel material of workpiece). Further, the shearing is performed by changing the shear angle $\alpha$, first difference of inclination angle $\Delta$CA, and second difference of inclination angle $\Delta$CB of the shearing apparatus by a plurality of patterns. Details are explained later in the EXAMPLES.

The difference of radius of curvature $\Delta$R is preferably uniform along the direction of extension of the cutting edge (direction X in FIG. 12). If the cutting edge is, for example, formed with a partial depression or otherwise the difference of radius of curvature $\Delta$R is uneven along the direction X in FIG. 12, the roughness of the fractured surface becomes greater and the fatigue characteristics and hydrogen embrittlement resistance are liable to fall. In the second embodiment, the amount of change of the difference of radius of curvature $\Delta$R in the range of 1 mm along the direction of extension of the cutting edge being 20% or less of the average value of the difference of radius of curvature $\Delta$R at the cutting edge as a whole is desirable on the point that the roughness of the fractured surface can be suppressed and a drop in the fatigue characteristics and hydrogen embrittlement resistance can be effectively suppressed. However, a certain effect is obtained even if the difference of radius of curvature $\Delta$R is uneven along the direction of extension of the cutting edge.

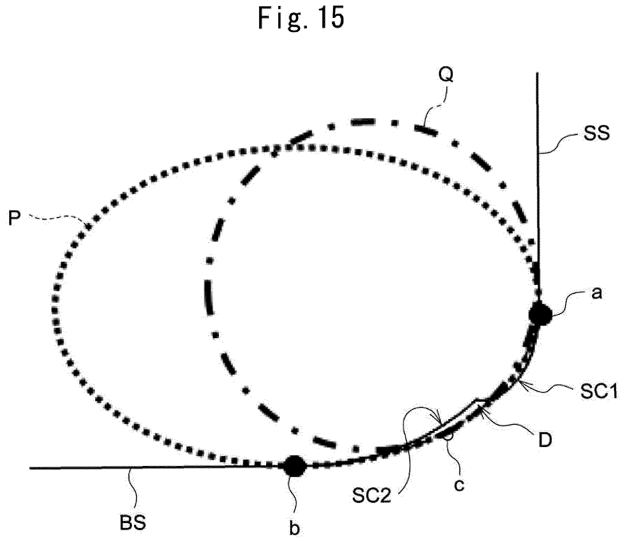

Further, in the second embodiment, if the radius of curvature of the cutting edge at the cross-section is uneven, it is possible to define an approximate circle so as to specifically determine one radius of curvature R for using the above calculation formula. Specifically, for example, in the cross-section of FIG. 15, a case where a depression D is formed between the bottom surface BS and the side surface SS and curved surfaces are respectively formed at the top side of the depression D and the bottom side of the depression D. Note that, the bottom surface BS corresponds to the first bottom surface 21a and second bottom surface 22a. Further, the side surface SS corresponds to the first side surface 21b and second side surface 22b.

The intersection point of the contour of the curved surface SC1 of the top side of the depression D in FIG. 15 and the contour of the side surface SS of the top side of the curved surface SC1 is defined as "a". Further, the intersection point of the contour of the curved surface SC2 of the bottom side of the depression D in FIG. 15 and the contour of the bottom surface BS of the left side of the curved surface SC2 is defined as "b".

Next, the approximate ellipse P with the smallest discrepancy from the cross-sectional profile of the cutting edge passing through the intersection point "a" and the intersection point "b" and comprised of the curved surface SC1 and curved surface SC2 is defined. Specifically, in the plurality of approximate ellipses passing through the intersection point "a" and the intersection point "b", the separation distance with the cross-sectional profile of the cutting edge along the normal directions at the different points of the approximate ellipse are measured. Further, the approximate ellipse with the smallest sum of the separation distance in the section sandwiched between the intersection point "a" and the intersection point "b" is defined. In FIG. 15, the defined approximate ellipse P is illustrated by a broken line shape.

Next, on the defined approximate ellipse P, a bisecting point "c" with equal distances from the intersection point "a" and intersection point "b" is defined at the cross-sectional profile side of the curved surface SC1 and curved surface SC2 (bottom right side in FIG. 15). Further, an approximate circle Q passing through the bisecting point "c" and closest approaching the bottom surface BS and the side surface SS in the cross-section is defined. In FIG. 15, the defined approximate circle Q is illustrated by the one-dot chain line shape. The radius of the defined approximate circle Q can be used as the radius of curvature R for use in the above calculation formula. Further, in the above explanation, the case where the radius of curvature of the cutting edge becomes uneven due to formation of the depression D at the cutting edge was explained, but even if a depression D is not formed at the cutting edge, as shown in FIG. 15, it is possible to specifically determine one radius of curvature R. That is, it is possible to specifically determine a single radius of curvature R by specifically determining the intersection point "a" of the curved surface and side surface SS of the cutting edge and the intersection point "b" of the curved surface and bottom surface BS, specifically determining an approximate ellipse P as explained above, specifically determining the bisecting point "c", and specifically determining the approximate circle Q.

In the second embodiment, the sum of the first difference of inclination angle $\Delta$CA and the second difference of inclination angle $\Delta$CB is made the total difference of inclination angle $\Delta$CT

$$(\Delta CT = \Delta CA + \Delta CB \ ...(1))$$

Here, it is important that the total difference of inclination angle $\Delta$CT satisfy the relationship of

$$(0.15 \times \alpha^2 + 0.05 \times \alpha + 1) < \Delta CT \leq 40 \ ...(I)$$

In the second embodiment, the total difference of inclination angle $\Delta$CTmay be comprised of only the first difference of inclination angle $\Delta$CA, may be comprised of only the second difference of inclination angle $\Delta$CB, or may be comprised of both the $\Delta$CA and $\Delta$CB. Whatever the case, if the total difference of inclination angle $\Delta$CT is more than 40, the burr formed at the cutting edge becomes too large. For this reason, the upper limit value of the total difference of inclination angle $\Delta$CTis set to 40. On the other hand, if the $\Delta$CTis larger than the lower limit value $(0.15 \times \alpha^2 + 0.05 \times \alpha + 1)$ in accordance with the shear angle $\alpha$, the cutting edge of the second cutting blade 22 can be kept from biting into the workpiece 5. Further, in the workpiece 5, propagation of a crack from the first cutting blade 21 side is promoted and propagation of a crack from the second cutting blade 22 side is suppressed, so the distance of propagation of a crack from the second cutting blade 22 side can be shortened or made zero. Accordingly, even if shearing the workpiece 5 in the state with a shear angle $\alpha$ imparted, the tensile residual stress at the edge of the steel material remaining on the second cutting blade 22 is reduced and the fatigue characteristics, hydrogen embrittlement resistance, etc. of the steel material are easily improved. In particular, a drop in the hydrogen embrittlement resistance easily occurs at a high strength steel material with a tensile strength of 980 MPa or more, so the apparatus of the present disclosure is advantageous in shearing of the high strength steel material. The lower limit of $\Delta$CT is preferably $2.0 \times (0.15 \times \alpha^2 + 0.05 \times \alpha + 1)$ (that is, $0.30 \times \alpha^2 + 0.10 \times \alpha + 2$), more preferably $2.5 \times (0.15 \times \alpha^2 + 0.05 \times \alpha + 1)$ (that is, $0.375 \times \alpha^2 + 0.125 \times \alpha + 2.5$).

Further, according to the findings of the inventors, the greater the tensile strength of the workpiece 5, the easier it is for a crack to propagate from the surface of the second cutting blade 22 side when shearing in a state imparting a shear angle $\alpha$. From this point as well, the apparatus of the present disclosure is effective for a high strength steel sheet with a high tensile strength.

The shearing apparatus according to the second embodiment may include, for example, any one of the following second-1 embodiment, second-2 embodiment, and second-3 embodiment.

(1) Second-1 Embodiment

As shown in FIGS. 12 to 16, the shearing apparatus 200A according to the second-1 embodiment is provide with a first cutting blade 21 and a second cutting blade 22. Here, the first cutting blade 21 may be a punch and the second cutting blade 22 may be a die. Furthermore, the shearing apparatus 200A may be provided with a holder 30 and movement device 40.

As shown in FIG. 14, in the second-1 embodiment, at the first front end part 21x, the part other than the first bottom surface 21a and first side surface 21b is comprised of the first inclined surface 21y inclined with respect to the first bottom surface 21a, while at the second front end part 22x, the part other than the second bottom surface 22a and second side surface 22b is comprised of the second inclined surface 22y inclined with respect to the second bottom surface 22a. In other words, the second-1 embodiment substantially does not have the first curved surface 21z and second curved surface 22z.

FIG. 14 is a cross-sectional view seen from the direction perpendicular to both of the direction of relative movement Y and the direction Z at which the first side surface 21b and holder 30 face each other, that is, is a cross-sectional view seen along the direction X along the length of the sheared edge. In the second-1 embodiment, the first front end part 21x as a whole may be comprised of the first inclined surface 21y or the second front end part 22x as a whole may be comprised of the second inclined surface 22y. The width W of the region of the first inclined surface 21y and the width W of the region of the second inclined surface 22y may be the same or may be different. Further, the first bottom surface 21a and second bottom surface 22a may be parallel to the direction Z at which the first side surface 21b and holder 30 face each other.

In the second-1 embodiment, the smaller angle which the first inclined surface 21y forms with the first bottom surface 21a is set as the inclination angle C1 [°]. Further, the smaller angle which the second inclined surface 22y forms with the second bottom surface 22a is set as the inclination angle C2 [°]. Further, the inclination angle C1 can be subtracted from the inclination angle C2 to calculate the first difference of inclination angle $\Delta$CA [°] ($\Delta$CA=C2-C1). In the second-1 embodiment, the first front end part 21x and the second front end part 22x can be configured so that the first difference of inclination angle $\Delta$CA [°] satisfies the relationship of

$$(0.15 \times \alpha^2 + 0.05 \times \alpha + 1) < \Delta CA \leq 40 \ \ldots(II)$$

That is, in the second-1 embodiment, the total difference of inclination angle $\Delta$CT is comprised of only the first difference of inclination angle $\Delta$CA and $\Delta$CT=$\Delta$CA. The above relationship (II) of the second-1 embodiment is similar to the relationship (I).

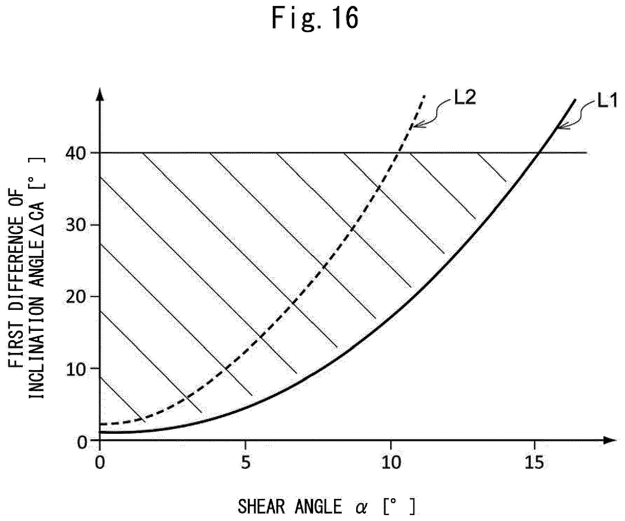

The above relationship (II) means the conditions shown by the hatched region in FIG. 16. That is, in shearing using the shearing apparatus according to the second-1 embodiment, the conditions of the shear angle $\alpha$ and first difference of inclination angle $\Delta$CA included in the hatched region are used.

The solid line L1 in FIG. 16 is one part of the curve $\Delta CA=0.15 \times \alpha^2 + 0.05 \times \alpha + 1$. The curve $\Delta$CA is obtained by changing the conditions of the shear angle $\alpha$ and first difference of inclination angle $\Delta$CA to several patterns for shearing, then measuring by X-rays the tensile residual stress at the edges of the products. Note that at the time of X-ray measurement, the spot diameter was made 500 $\mu$m and the tensile residual stress in the sheet thickness direction at the center position of the sheet thickness direction was measured. Details are explained further in the EXAMPLES.

Further, the broken line L2 in FIG. 16 is one part of the curve $\Delta CA=(0.3 \times \alpha^2 + 0.1 \times \alpha + 2)$. The curve of the line L2, like the case of the line L1, is derived in accordance with the results of measurement of the tensile residual stress of the edge of the product. The shearing is conducted so that the difference of inclination angle $\Delta$CA satisfies the relationship of $(0.3 \times \alpha^2 + 0.1 \times \alpha + 2) < \Delta CA \leq 40$, whereby the magnitude of the residual stress at the edge of the product can be lowered more.

Above, in the shearing apparatus 200A according to the second-1 embodiment, the inclination angle C1 of the first inclined surface 21y at the first front end part 21x is subtracted from the inclination angle C2 of the second inclined surface 22y at the second front end part 22x to calculate the first difference of inclination angle $\Delta$CA. The first front end part 21x and second front end part 22x are configured so that the calculated first difference of inclination angle $\Delta$CA satisfies the relationship (I) of $(0.15 \times \alpha^2 + 0.05 \times \alpha + 1) < \Delta CA \leq 40$. For this reason, the cutting edge of the second cutting blade 22 side is easily kept from biting into the workpiece 5 at the time of shearing. Further, propagation of a crack from the surface of the workpiece 5 at the first cutting blade 21 side is promoted and propagation of a crack from the surface of the workpiece 5 at the second cutting blade 22 side is suppressed, so the distance of propagation of a crack from the second cutting blade 22 side can be shortened or made zero.

(2) Second-2 Embodiment

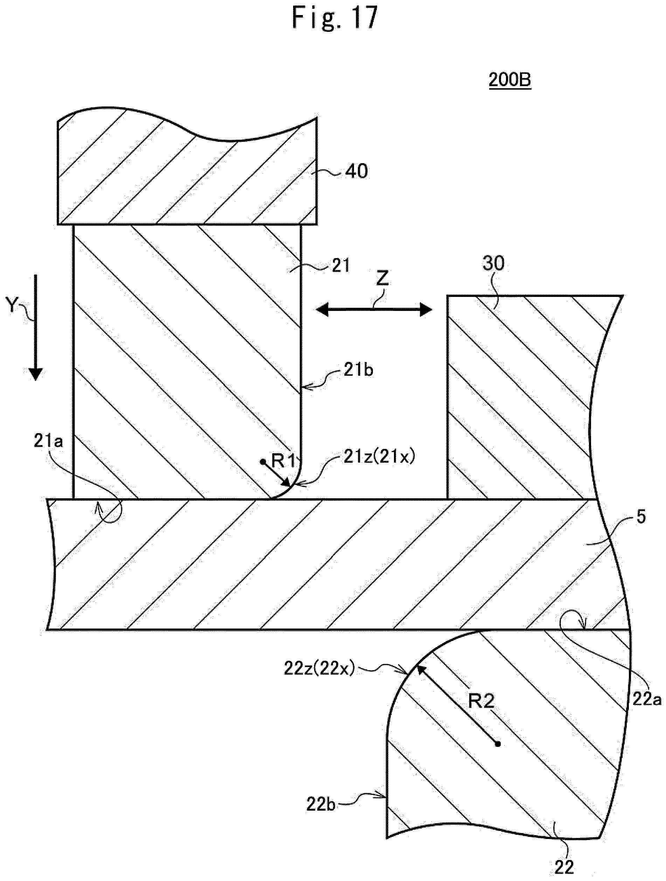

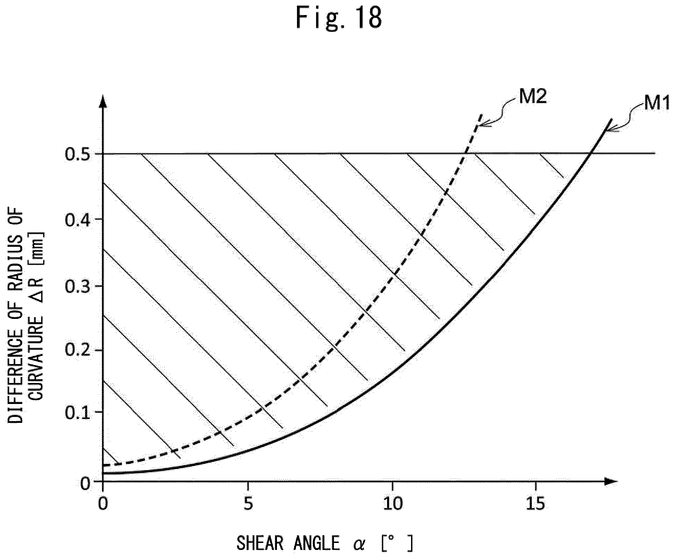

Next, a shearing apparatus 200B according to a second-2 embodiment will be explained referring to FIG. 17 and FIG. 18. FIG. 17 is a cross-sectional view seen from a direction perpendicular to both the direction of relative movement Y and the direction Z at which the first side surface 21b and holder 30 face each other, that is, a cross-sectional view seen along the direction X (see FIG. 12). FIG. 17 corresponds to a cross-sectional view along the arrow IV-IV of FIG. 13 and corresponds to a modification of FIG. 14. Here, in the second-1 embodiment, the first front end part 21x of the first cutting blade 21 and the second front end part 22x of the second cutting blade 22 respectively have inclined surfaces, while in the second-2 embodiment, the first front end part 21x of the first cutting blade 21 and the second front end part 22x of the second cutting blade 22 respectively have curved surfaces. In other words, in the second-2 embodiment, the first front end part 21x does not substantially have the first inclined surface 21y while the second front end part 22x does not substantially have the second inclined surface 22y.

The rest of the configuration other than the first front end part 21x and second front end part 22x in the shearing apparatus 200B according to the second-2 embodiment is the same as the members of the same names in the shearing apparatus 200A according to the second-1 embodiment.

In the second-2 embodiment, as shown in FIG. 17, the first front end part 21x is comprised of the first curved surface 21z and the second front end part 22x is comprised of the second curved surface 22z. That is, in the second-2 embodiment, the total difference of inclination angle $\Delta CT$ of the above formula (1) is comprised of only the second difference of inclination angle $\Delta CB$ and $\Delta CT=\Delta CB$. Here, the radius of curvature of the first curved surface 21z is set to R1 [mm]. Further, the radius of curvature of the second curved surface 22z is set to R2 [mm]. Further, the radius of curvature R1 is subtracted from the radius of curvature R2 to calculate the difference of radius of curvature $\Delta R$ [mm] ($\Delta R=R2-R1$). In the second-2 embodiment, the first front end part 21x and the second front end part 22x can be comprised so that the calculated difference of radius of curvature $\Delta R$ [mm] satisfies the relationship of

$$(0.001875\times\alpha^2+0.000625\times\alpha+0.0125)<\Delta R\leq0.5 \quad \dots(\text{III})$$

where, if the above relationship (III) is made 80X, the relationship of

$$(0.15\times\alpha^2+0.05\times\alpha+1)<80\times\Delta R\leq40 \dots(\text{IV})$$

is obtained. Further, from the above formula (3) and relationship (IV), the following relationship (V) is obtained.

$$(0.15\times\alpha^2+0.05\times\alpha+1)<\Delta CB\leq40 \dots(\text{V})$$

That is, the above relationship (V) of the second-2 embodiment is similar to the above relationship (I).

The above relationship (III) means the conditions shown by the hatched region in FIG. 18. That is, in the method of shearing using the shearing apparatus 200B according to the second-2 embodiment, the conditions of the shear angle $\alpha$ and the difference of radius of curvature $\Delta R$ included in the hatched region are used.

The solid line M1 in FIG. 18 is one part of the curve $\Delta R=0.001875\times\alpha^2 + 0.000625\times\alpha+0.0125$. The curve $\Delta R$ is obtained by changing the conditions of the shear angle $\alpha$ and difference of radius of curvature $\Delta R$ to several patterns for shearing, then measuring by X-rays the tensile residual stress at the edges of the products. Details are explained further in the EXAMPLES.

Further, the broken line M2 in FIG. 18 is one part of the curve $\Delta R=0.00375\times\alpha^2+ 0.00125\times\alpha+0.025$. The curve of the line M2, like the case of the line M1, is derived in accordance with the results of measurement of the tensile residual stress of the edge of the product. The shearing is conducted so that the difference of radius of curvature $\Delta R$ satisfies the relationship of $(0.00375\times\alpha^2+0.00125\times\alpha+0.025)<\Delta R\leq0.5$, whereby the magnitude of the residual stress at the edge of the product can be lowered more.

Above, in the shearing apparatus 200B according to the second-2 embodiment, the radius of curvature R1 of the first curved surface 21z at the first front end part 21x is subtracted from the radius of curvature R2 of the second curved surface 22z at the second front end part 22x to calculate the difference of radius of curvature $\Delta R$. The first front end part 21x and second front end part 22x are configured so that the calculated difference of radius of curvature $\Delta R$ satisfies the relationship (III) of $(0.001875\times\alpha^2+0.000625\times\alpha+0.0125)<\Delta R\leq0.5$, in other words, satisfies the above relationship (V). For this reason, in the second-2 embodiment as well, the cutting edge of the second cutting blade 22 side is easily kept from biting into the workpiece 5 at the time of shearing. Further, propagation of a crack from the surface of the workpiece 5 at the first cutting blade 21 side is promoted and propagation of a crack from the surface of the workpiece 5 at the second cutting blade 22 side is suppressed, so the distance of propagation of a crack from the second cutting blade 22 side can be shortened or made zero.

(3) Second-3 Embodiment

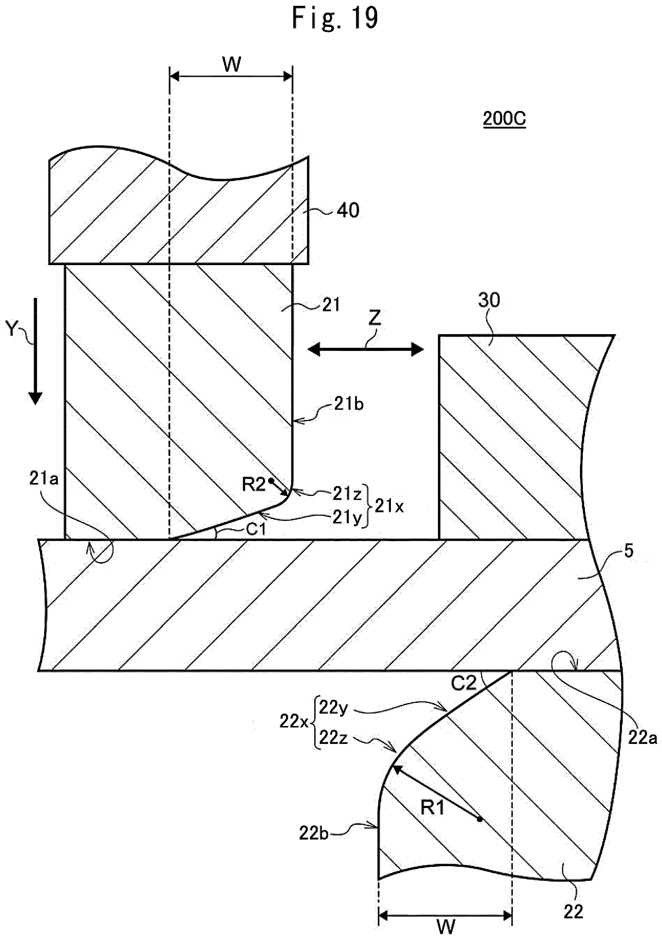

Next, a shearing apparatus 200C according to a second-3 embodiment will be explained referring to FIG. 19. FIG. 19 is a cross-sectional view seen from a direction perpendicular to both the direction of relative movement Y and the direction Z at which the first side surface 21b and holder 30 face each other, that is, a cross-sectional view seen along the direction X (see FIG. 12). FIG. 19 corresponds to a cross-sectional view along the arrow IV-IV of FIG. 13 and corresponds to a modification of FIG. 14 or FIG. 17.

The second-3 embodiment differs from the second-1 embodiment and second-2 embodiment on the point that the first front end part 21x has an inclined surface and curved surface partially combined. Further, the second front end part 22x also differs from the second-1 embodiment and second-2 embodiment on the point of having the inclined surface and curved surface partially combined. That is, in the second-3 embodiment, the total difference of inclination angle $\Delta$CT of the above relationship (1) is comprised by the sum of the first difference of inclination angle $\Delta$CA and second difference of inclination angle $\Delta$CB.

The rest of the configuration other than the first front end part 21x and second front end part 22x in the shearing apparatus 200B according to the second-3 embodiment is the same as the members of the same names in the shearing apparatuses 200 and 200A according to the second-1 embodiment and second-2 embodiment.

In the second-3 embodiment, as shown in FIG. 19, the first front end part 21x is comprised of a first inclined surface 21y inclined with respect to the first bottom surface 21a and a first curved surface 21z. Further, the second front end part 22x is comprised of a second inclined surface 22y inclined with respect to the second bottom surface 22a and a second curved surface 22z. The first bottom surface 21a and second bottom surface 22a may be parallel with the direction Z at which the first side surface 21b and holder 30 face each other.

Here, the smaller angle which the first inclined surface 21y forms with the first bottom surface 21a is set as the inclination angle C1 [°]. Further, the smaller angle which the second inclined surface 22y forms with the second bottom surface 22a is set as the inclination angle C2 [°]. Further, the inclination angle C1 is subtracted from the inclination angle C2 to calculate the first difference of inclination angle $\Delta$CA [°] ($\Delta$CA=C2-C1).

On the other hand, the radius of curvature of the first curved surface 21z is set to R1 [mm]. Further, the radius of curvature of the second curved surface 22z is set to R2 [mm]. Further, the radius of curvature R1 is subtracted from the radius of curvature R2 to calculate the difference of radius of curvature $\Delta$R [mm] ($\Delta$R=R2-R1). Further, the difference of radius of curvature $\Delta$R is used to calculate the second difference of inclination angle $\Delta$CB [°] from the above formula (3) ($\Delta$CB=80$\times\Delta$R).

Further, the sum of the calculated first difference of inclination angle $\Delta$CA [°] and calculated second difference of inclination angle $\Delta$CB [°] is set as the total difference of inclination angle $\Delta$CT [°]. In the second-3 embodiment, the first front end part 21 and the second front end part 22x are configured so that the total difference of inclination angle $\Delta$CT [°] satisfies the relationship of $(0.15\times\alpha^2+0.05\times\alpha+1)<\Delta CT\leq 40$.

For this reason, at the time of shearing, propagation of a crack from the surface of the workpiece 5 at the first cutting blade 21 side is easily promoted. By propagation of a crack from the surface of the workpiece 5 at the first cutting blade 21 side being promoted, it is possible to reduce the tensile residual stress of the edge of the steel material of the product remaining on the second cutting blade 22 after shearing.

### 4.3 Supplement

Above, a first embodiment and second embodiment of the shearing apparatus of the present disclosure were illustrated. The embodiments of the shearing apparatus for producing the steel material 10 are not limited to the first embodiment and second embodiment. Below, the shearing apparatus of the present disclosure will be further explained.

### 4.3.1 Regarding Secondary Effects

There is a method for shaving or otherwise additionally shearing the edge of a steel material after the main shearing so as to eliminate work hardening of the edge and preventing the formation of tensile residual stress. On the other hand, according to the shearing apparatus of the present disclosure, the formation of a large tensile residual stress at the edge of the steel material 10 of the workpiece is prevented at the time the main shearing, so additional shearing work is unnecessary. For this reason, the burden of the work as a whole can be reduced.

### 4.3.2 Regarding Tool Material

When shearing a workpiece which is high in strength (for example, one having a tensile strength of 980 MPa or more), damage to the front end part easily propagates along with the number of shear operations. On this point, the front end part of the first cutting blade or the second cutting blade is preferably comprised of a material with a 58 Rockwell hardness (HRC) or more. Further, from the viewpoint of suppressing damage to the front end part, separate from setting the hardness of the material forming the front end part or together with setting the hardness of the material forming the front end part, it is preferable to apply a coating to the front end part. If a coating is applied, in particular application of a PVD (physical vapor deposition) coating is more preferable in terms of enabling easy prevention of deformation or change of properties of the metal material of the base material.

4.3.3 Regarding Case of Punching

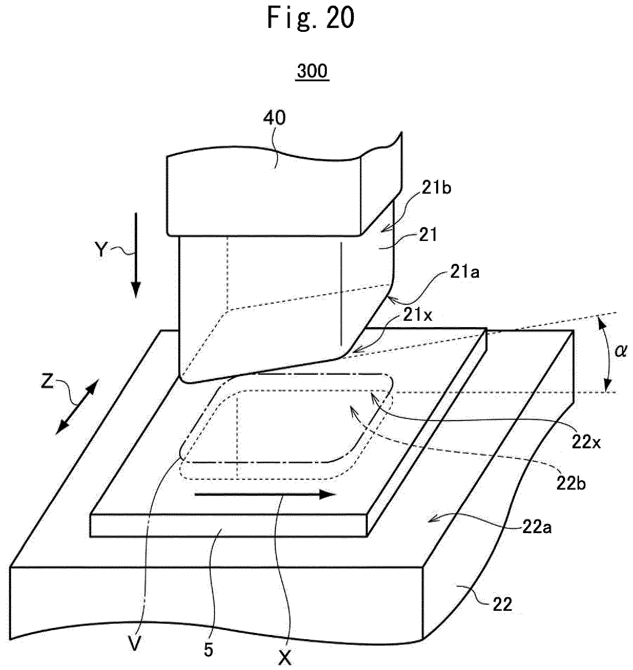

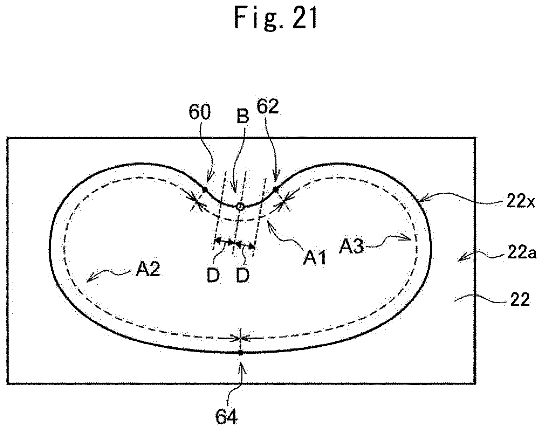

In the above explanation, an embodiment of cutting off the end part of the workpiece 5 was illustrated, but the art of the present disclosure is not limited to this. For example, as shown in FIG. 20 and FIG. 21, the art of the present disclosure can also be applied to a shearing apparatus used for stamping or punching or other press working.

The shearing apparatus 300 illustrated in FIG. 20 has a punch as a first cutting blade 21 and a die as a second cutting blade 22 and furthermore optionally has a holder (not shown) and a movement device 40. The first cutting blade 21 is the top cutting blade of the shearing apparatus 300 and has a first bottom surface 21a (bottom surface in FIG. 20) contacting one surface of the workpiece 5. Further, the first cutting blade 21 has a first side surface 21b connecting to the first bottom surface 21a and a first front end part 21x positioned between the first bottom surface 21a and the first side surface 21b. On the other hand, the second cutting blade 22 is the bottom cutting blade of the shearing apparatus 300 and has a second bottom surface 22a (top surface in FIG. 20) contacting the other surface of the workpiece 5. Further, the second cutting blade 22 has a second side surface 22b connecting to the second bottom surface 22a and a second front end part 22x positioned between the second bottom surface 22a and the second side surface 22b.

One part of the second bottom surface 22a is provided with a depression or hole. The second side surface 22b forms the inside wall surface of that depression or hole. That is, the second front end part 22x is represented as an edge of the depression or hole. At the depression or hole, the bottom part of the first cutting blade 21 is inserted. The workpiece 5 is punched according to the shape of the edge of the depression or hole. At the top surface of the workpiece 5 of FIG. 20, the outer edge of the part punched out from the workpiece 5 is illustrated by the region V surrounded by the one-dot chain line. In FIG. 20, illustration is omitted, but a holder may be provided around the region V of the top surface of the workpiece 5. The edge and region V of the depression or hole illustrated in FIG. 20 are rectangular shapes with four rounded parts in a plan view, but the punched out shape is not limited to this and can be suitably changed to a circular shape or other geometric shape.

In the shearing apparatus 300, the first bottom surface 21a of the first cutting blade 21 is inclined with respect to the second bottom surface 22a of the second cutting blade 22. A constant shear angle $\alpha$ is formed between the first front end part 21x of the first cutting blade 21 and the second front end part 22x of the second cutting blade 22.

In the case of punching using such a shearing apparatus 300, if the first cutting blade 21 descends along the direction of relative movement Y, first, the part positioned at the bottom end of the first front end part 21x of the first cutting blade 21 contacts the workpiece 5. Further, the contact position (shearing position) of the first front end part 21x and the workpiece 5 move along the direction X to the right side in FIG. 20.

Further, in the shearing apparatus 300, the shapes in a plan view of the edges of the first front end part 21x and second front end part 22x of the cutting edges circle around so that closed spaces are formed at their insides and are not straight. For this reason, the direction Z referred to above is not specifically determined as being any one direction. For any position on the edge of the region V of the top surface of the workpiece 5, the direction Z at which the first side surface 21b and holder face each other is the normal direction at any position. For example, the four sides of the approximately rectangle of the edges of the region V in FIG. 20 may include a set of long sides parallel to each other in the top-bottom direction and a set of short sides parallel to each other in the left-right direction. If the first front end part 21x and second front end part 22x are positioned on the long sides among the four sides of the approximately rectangle of the region V, the direction Z at which the first side surface 21b and the holder face each other can be set to the direction perpendicular to the direction Z on the top surface of the workpiece 5. Further, if the first front end part 21x and second front end part 22x are positioned on the short sides among the four sides of the approximately rectangle of the region V, the direction Z at which the first side surface 21b and the holder face each other can be set to the same direction as the direction X. That is, the direction Z at which the first side surface 21b and the holder face each other changes in accordance with any position where the direction Z is set on the top surface of the workpiece 5.

In the shearing apparatus 300 as well, when viewed from a direction perpendicular to both the direction of relative movement Y and the direction Z where the first side surface 21b and holder face each other, the first front end part 21x can have a first inclined surface inclined with respect to the first bottom surface 21a or a first curved surface. Further, the second front end part 22x can have a second inclined surface inclined with respect to the second bottom surface 22a or a second curved surface.

In the shearing apparatus 300 as well, the configuration of at least one of the first embodiment and second embodiment can be employed. For example, the above desired effect is exhibited by the coefficient of friction of the first front end part 21x being 1.2 times of the coefficient of friction of the second front end part 22x. Alternatively, in the shearing apparatus 300 as well, the smaller angle which the first inclined surface 21y of the first front end part 21x forms with the first bottom surface 21a can be specifically determined as the inclination angle C1. Further, the smaller angle which the second inclined surface 22y of the second front end part 22x forms with the second bottom surface 22a can be specifically determined as the inclination angle C2. Further, the inclination angle C2 can be subtracted from the inclination angle C1 to calculate the first difference of inclination angle $\Delta$CA. Further, at the shearing apparatus 300 as well, it is possible to specifically determine the radius of curvature R1 of the first curved surface 21z of the first front end part 21x and the radius of curvature R2 of the second curved surface 22z of the second front end part 22x and possible to calculate the second difference of inclination angle $\Delta$CB from the difference of radii of curvature $\Delta$R=R2-R1 based on the above formula (3). From the specifically determined $\Delta$CA and $\Delta$CB, $\Delta$CT is found based on the above formula (1). The above desired effect is exhibited by the first front end part 21x and the second front end part 22x being configured so that the $\Delta$CT satisfies the relationship of

$$(0.15 \times \alpha^2 + 0.05 \times \alpha + 1) < \Delta CT \leq 40$$

The rest of the configuration of the shearing apparatus 300 is as explained above, so explanations will be omitted.

Further, the shear angle $\alpha$ may partially differ in the range where the first front end part and second front end part are present. For example, FIG. 21 illustrates the second front end part 22x circling about so that a closed space is formed inside. In FIG. 21, the overall shape of the edge of the second front end part 22x is an oval shape in a plan view. The part at the center of the top side in FIG. 21 is depressed toward the bottom side. Here, in FIG. 21, the area between the left side division point 60 of the depression at the second front end part 22x and the right side division point 62 of the depression is set as A1. Further, at the second front end part 22x, the area between the division point 60 and the division point 64 positioned at the opposite side to the area A1 is set as A2. Further, between the division point 62 and division point 64 at the second front end part 22x, the right side area in FIG. 21 is set as A3.

In the case of the second cutting blade 22 shown in FIG. 21, for example, it is possible to make the shear angle $\alpha$ at the area A1 about 3°, make the shear angle $\alpha$ at the area A2 0°, and make the shear angle $\alpha$ at the area A3 about 10°. By making the shear angle $\alpha$ partially different at the first front end part and second front end part, it becomes possible to make the magnitude of the tensile residual stress allowed at the edge of the product after punching partially different in accordance with the position.

Note that, the method of forming the shapes of the first front end part and second front end part so that the shear angle $\alpha$ partially differs is not limited to the case of punching. As explained above, it is also possible to employ it even in the case where the first front end part and second front end part extend straight.

4.3.4 Regarding Method of Confirmation of Shear Angle

As the method of objectively confirming the magnitude of the shear angle $\alpha$ on the first front end part or on the second front end part, for example, it is possible to set a region having a certain width in a plan view on the front end part and use a plurality of measured values extracted in the set region. Specifically, for example, as shown in FIG. 21, a region centered at a specific point B on the edge of the second front end part 22x in a plan view, running along a direction of extension of the tangent at the point B, and having certain widths D to the left and right extending is set. The widths D can, for example, be set to about 3 mm. Further, at the part included in the set region, the shear angle $\alpha$ between the second front end part 22x and the first front end part is measured at several locations. Further, at the part contained in the set region, it is possible to calculate the average value of the plurality of measured shear angles to specifically determine the shear angle $\alpha$ The range of the prescription of the shear angle $\alpha$, for example, can be set to one such as 3°±0.5°.

4.3.5 Others

In the above explanation, embodiments in which at the shearing apparatus, the first cutting blade was provided at the top and the second cutting blade was provided at the bottom were shown, but the art of the present disclosure is not limited to these embodiments. The first cutting blade may also be provided at the bottom and the second cutting blade may be provided at the top. Alternatively, the cutting blades may be placed at directions other than the top-bottom direction.

Further, the desired effects are exhibited even if partially combining the structures of the shearing apparatuses of the above first embodiment and second embodiment (second-1 embodiment to second-3 embodiment). The shearing apparatus can include various embodiments not explained above.

The shearing apparatuses according to the first embodiment and second embodiment may, for example, also be crop shears which are placed on a hot rolling line of an ironmaking plant etc. and shear the end parts of the steel sheets of the workpieces 5.

5. Method of Production of Steel Material

The art of the present disclosure includes an aspect as a method of production of a steel material of a workpiece. The method of production of the present disclosure is a method of production of a steel material 10 as a processed material using the above shearing apparatus of the present disclosure, the method comprises

placing a workpiece 5 between a first cutting blade 21 and a second cutting blade 22 and
making the first cutting blade 21 and the second cutting blade 22 move relative to each other to shear the workpiece 5. The configuration of the shearing apparatus and the flow of shearing of the workpiece 5 are as already explained. Their explanations will be omitted here.

The shape of the workpiece 5 is not particularly limited so long as shearing is possible. The workpiece 5, for example, may be a sheet shape or may be a rod shape. If the workpiece 5 is a sheet shape, its sheet thickness may be, for example, 0.8 mm or more and may be 5.0 mm or less or 3.0 mm or less. Further, if the workpiece 5 is a rod shape, the cross-sectional shape is not particularly limited. For example, it may be a circular shape or may be a polygonal shape. The circle equivalent diameter of the cross-section may be 5 mm or more and may be 100 mm or less. Furthermore, the workpiece 5 may be one which is formed into some sort of shape by bending etc. The workpiece 5 may be provided with a first surface 10a and a second surface 10b at the opposite side to the first surface 10a. The first surface 10a and the second surface 10b may be parallel with each other. Further, the "parallel" referred to in the present application is not limited to strictly parallel and may also be substantially parallel. That is, even when the first surface 10a and the second surface 10b are not strictly parallel, they are deemed parallel if within the range of error allowed in industrial production. Specifically, if the angle formed by the first surface 10a and the second surface 10b is $0° \pm 1°$, that first surface 10a and second surface 10b are deemed parallel. The workpiece 5 may also have a surface treated layer. As the surface treated layer, a plating layer, coating layer, etc. may be mentioned. Further, the workpiece 5 may include a plurality of layers of different types of steel. For example, as the workpiece 5, clad steel can also be employed.

The mechanical properties of the workpiece 5 are not particularly limited and can be suitably determined in accordance with the application of the steel material 10. However, problems such as a drop in the hydrogen embrittlement resistance due to the tensile residual stress occur particularly easily in high strength steel materials. On this point, the tensile strength of the workpiece 5 is preferably 980 MPa or more, more preferably 1180 MPa or more, particularly preferably 1470 MPa or more. The upper limit of the tensile strength of the workpiece 5 is not particularly limited, but, for example, may be 2500 MPa or less, may be 2200 MPa or less, or may be 2000 MPa or less. Further, the higher the strength of the workpiece 5, the greater the ratio of the fractured surface 1b in the sheared edge 1, that is, the larger the part at which the tensile residual stress should be reduced, and the better the effect due to the art of the present disclosure that can be expected. Further, the workpiece 5 may be cold pressed or otherwise cold worked or hot stamped or otherwise hot worked. That is, the steel material 10 may be produced by the above shearing after cold working or hot working. More specifically, the method of production of the steel material 10 of the present disclosure may include cold working or hot working the workpiece 5, placing the cold worked or hot worked workpiece 5 between the first cutting blade 21 and the second cutting blade 22, and making the first cutting blade 21 and the second cutting blade 22 relatively move to shear the workpiece 5.

EXAMPLES

1. Evaluation of Sheared Edge of Steel Material

At the sheared edge of the steel material, the area ratio of the first part and the area ratio of the second part at the fractured surface were evaluated and the relationship of the area ratios and the tensile residual stress at the fractured surface was evaluated. Further, the "first part" refers to the part formed by the first crack propagating from the rollover side to the burr side while the "second part" refers to the part formed by the second crack propagating from the burr side to the rollover side.

1.1 Workpiece

As the workpiece, a steel sheet A with a tensile strength of the 590 MPa class (sheet thickness 1.6 mm), a steel sheet B with a tensile strength of the 980 MPa class (sheet thickness 1.6 mm), and a steel sheet C with a tensile strength of the 1470 MPa class (sheet thickness 1.6 mm) were prepared.

1.2 Shearing Conditions for Steel Sheet

Each steel sheet was placed between a punch and die and the punch and die were made to relatively move so as to shear off one part of the steel sheet by the punch and obtain a steel material having a sheared edge. At the sheared edge, a rollover was formed at the punch side and a burr was formed at the die side. Each of the steel sheets A to C were sheared under the conditions of the following Examples 1 to 4 and Comparative Examples 1 to 4 and the properties of each of the sheared edges were confirmed.

### 1.2.1 Example 1

A steel sheet was formed with a punch hole by a punch and die ($\phi$10 mm pierced hole). At that time, the clearance between the punch and die was made 10% of the sheet thickness of the steel sheet. The shape of the cutting edge (front end) of the punch was R=0.1 mm while the shape of the cutting edge (front end) of the die was R=0.4 mm. Further, die was given a TiCN coating in advance, while the punch was not particularly given a coating. Furthermore, at the time of shearing of the steel sheet, a lubricant (rust prevention oil) was coated on only the die side (burr side) surface of the steel sheet.

### 1.2.2 Example 2

Except for not coating a lubricant on either the punch side surface and die side surface of the steel sheet at the time of shearing of the steel sheet, the same procedure was performed as in Example 1 to shear a steel sheet.

### 1.2.3 Example 3

Except for not giving either the punch and die a coating, the same procedure was performed as in Example 1 to shear a steel sheet.

### 1.2.4 Example 4

Except for not giving either the punch and die a coating and not coating a lubricant on either the punch side surface and die side surface of the steel sheet, the same procedure was performed as in Example 1 to shear a steel sheet.

### 1.2.5 Comparative Example 1

Except for the shape of the cutting edge (front end) of the punch being R=0.1 mm and the shape of the cutting edge (front end) of the die being R=0.1 mm, except for not giving either the punch and the die a coating, and except for not coating a lubricant on either the punch side surface and die side surface of the steel sheet at the time of shearing of the steel sheet, the same procedure was performed as in Example 1 to shear a steel sheet.

### 1.2.6 Comparative Example 2

Except for the shape of the cutting edge (front end) of the punch being R=0.4 mm and the shape of the cutting edge (front end) of the die being R=0.1 mm, except for not giving either of the punch and die a coating, and except for coating a lubricant (rust prevention oil) on only the punch side (rollover side) surface of the steel sheet at the time of shearing of the steel sheet, the same procedure was performed as in Example 1 to shear a steel sheet.

### 1.2.7 Comparative Example 3

Except for the shape of the cutting edge (front end) of the punch being R=0.4 mm and the shape of the cutting edge (front end) of the die being R=0.1 mm, except for giving the punch in advance a TiCN coating, while not giving the die any coating in particular, and except for coating a lubricant on both of the punch side and die side surface of the steel sheet at the time of shearing of the steel sheet, the same procedure was performed as in Example 1 to shear a steel sheet.

### 1.2.8 Comparative Example 4

Except for the shape of the cutting edge (front end) of the punch being R=0.4 mm and the shape of the cutting edge (front end) of the die being R=0.1 mm, except for giving the punch in advance a TiCN coating, while not giving the die any coating in particular, and except for coating a lubricant on only the punch side (rollover side) surface of the steel sheet at the time of shearing of the steel sheet, the same procedure was performed as in Example 1 to shear a steel sheet.

### 1.3 Evaluation Conditions

The steel sheets A to C were sheared under the conditions of Examples 1 to 4 and Comparative Examples 1 to 4, then the properties of the sheared edges of the steel materials were evaluated as follows:

1.3.1 Specific Determination of Area Ratio of First Part at Fractured Surface

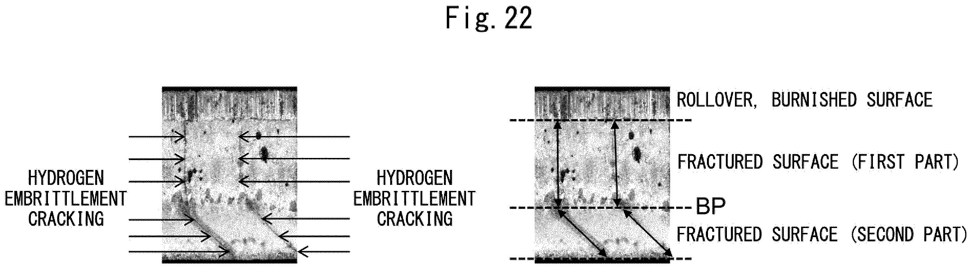

To a 3%NaCl solution, 3 g/L of NH$_4$SCN was added to prepare an electrolyte. The steel material was dipped in the prepared electrolyte, then the steel material was electrolytically charged for 3 hours under conditions of a current density of 10 mA/cm$^2$ to introduce hydrogen to at least the sheared edge of the steel material. After the electrolytic charging, the steel material was taken out from the solution and the properties of the sheared edge were examined. Due to the large amount of hydrogen introduced, hydrogen embrittlement cracking was confirmed at the sheared edge. Here, in the fractured surface forming part of the sheared edge, the residual stress rapidly changed at the position where the first crack propagating from the rollover side and the second crack propagating from the burr side met. For this reason, the direction of hydrogen embrittlement cracking occurring due to penetration of hydrogen as well rapidly changed at the position where the first crack and the second crack met. FIG. 22 shows one example of a form of hydrogen embrittlement cracking occurring at the sheared edge. As shown in FIG. 22, it is learned that the direction of hydrogen embrittlement cracking occurring due to penetration of hydrogen rapidly changes at the position BP. In this way, the position where the direction of hydrogen embrittlement cracking rapidly changes at the fractured surface forming part of the sheared edge was deemed the "boundary of the first part due to the crack propagating from the rollover side and the second part due to the crack propagating from the burr side" and the area ratio of the first part in the fractured surface was specifically determined.

1.3.2 Measurement of Tensile Residual Stress of Fractured Surface

A spot diameter $\phi$500 $\mu$m X-ray was fired centered at three boundary positions dividing the fractured surface into four equal parts in the sheet thickness direction to measure the residual stress. The direction of measurement of the residual stress was made the three directions of the sheet thickness direction, sheet width direction, and the 45° direction from the sheet thickness direction. For calculation of the residual stress, the sin$^2 \psi$ method was used. The residual stress in the edge logarithmic direction was assumed to be zero and the maximum main stresses were calculated from the calculated residual stresses of the three directions. The values of the maximum main stresses calculated at the three locations were averaged.

1.4 Results of Evaluation

The results of evaluation are shown in the following Table 1.

[Table 1]

|  | Area ratio of first part in fractured surface [%] | | | Result of measurement of residual stress [MPa] | | |
|---|---|---|---|---|---|---|
|  | Steel sheet A | Steel sheet B | Steel sheet C | Steel sheet A | Steel sheet B | Steel sheet C |
| Ex. 1 | 78 | 100 | 100 | 231 | 180 | 372 |
| Ex. 2 | 65 | 89 | 89 | 256 | 361 | 612 |
| Ex. 3 | 59 | 65 | 69 | 268 | 506 | 802 |
| Ex. 4 | 55 | 63 | 65 | 270 | 510 | 804 |
| Comp. Ex. 1 | 49 | 48 | 45 | 278 | 794 | 1057 |
| Comp. Ex. 2 | 38 | 27 | 29 | 338 | 777 | 1149 |
| Comp. Ex. 3 | 29 | 10 | 9 | 390 | 891 | 1268 |
| Comp. Ex. 4 | 20 | 0 | 0 | 421 | 954 | 1460 |

As shown in Table 1, it is learned that if the area ratio of the first part at the fractured surface (part derived from first crack propagating from punch side) is larger than the area ratio of the second part at the fractured surface (part derived from second crack propagating from die side) (in particular, if 1.2 times or more), the tensile residual stress of the fractured surface can be reduced. Such an effect is similarly recognized regardless of the steel type. In particular, it is learned that the higher the strength of the steel sheet, the higher the effect that is obtained. Further, at the sheared edge of the steel sheet B of Example 1, when measuring the area ratio of the fractured surface, the area ratio of the fractured surface was 65% based on the product of the cut length and sheet thickness of the steel sheet B (cut length × sheet thickness) (100%). Further, at the sheared edge of the steel sheet B of Examples 2 to 4 and the sheared edge of the steel sheet C of Examples 1 to 4, the area ratio of the fractured surface was an area ratio equal to or greater than that of the steel sheet B of Example 1. In this way, if the ratio of the fractured surface at the sheared edge is large, it is believed that a higher effect can be obtained by reducing the tensile residual stress.

Further, in the above examples, embodiments using a steel sheet as the workpiece were illustrated, but the art of the present disclosure is not limited to the embodiments. The art of the present disclosure, as explained above, features the point of control of the direction of crack propagation at the fractured surface and can exhibit similar effects even with shapes other than sheet shapes. For example, the steel material may also be rod shaped.

2. Study of Shearing Apparatus

As explained above, to reduce the tensile residual stress at the fractured surface at the sheared edge of the steel material, it is important that the area ratio of the first part at the fractured surface be larger than the area ratio of the second part at the fractured surface. Shearing apparatuses able to realize this were variously studied. Below, one example of a shearing apparatus will be shown.

2.1 First Embodiment

As the steel materials of the workpieces, the tensile strength 1470 MPa class steel sheet A1 (sheet thickness 1.6 mm), steel sheet A2 (sheet thickness 0.8 mm), and steel sheet A3 (sheet thickness 4.0 mm) and the tensile strength 980 MPa class steel sheet B1 (sheet thickness 1.6 mm) and tensile strength 590 MPa class steel sheet C1 (sheet thickness 1.6 mm) were prepared.

The steel sheet was placed between a punch and die and the punch and die were made to relatively move so as to shear off one part of the steel sheet by the punch straight and obtain a workpiece having a sheared edge. At the sheared edge, a rollover was formed at the punch side and a burr was formed at the die side. The shear angle between the punch and die in shearing the steel sheet was made 3°. The clearance was made 10% of the sheet thickness. Further, the R of the cutting edge (front end) of the punch and the R of the cutting edge (front end) of the die were both 0.1 mm. Before shearing the steel sheet, the punch and the die were processed according to the following examples and comparative examples to change the coefficients of friction of the front end parts of the punch and die.

2.1.1 Study of Coating

Before shearing the steel sheet, at least one of the punch and die was given a coating like in the following Examples 1 to 3 and Comparative Example 1 to 3.

(1) Example 1-1

Only the die was given a DLC coating.

(2) Example 1-2

Only the die was given a CrSiN coating.

(3) Example 1-3

Only the die was given a TiN coating.

(4) Comparative Example 1-1

Only the punch was given a DLC coating.

(5) Comparative Example 1-2

Both of the punch and die were not given coatings. The coefficients of friction were made the same.

(6) Comparative Example 1-3

Both of the punch and die were given TiN coatings. The coefficients of friction were made the same.

2.1.2. Study of Surface Roughness

Before shearing the steel sheet, at least one of the punch and die was polished like in the following Examples 4 to 6 and Comparative Examples 4 to 6.

(1) Example 1-4

A grindstone of a granularity of the grinding abrasive of #230 (JIS R6001) was used to polish the surface of the die. The surface roughness Rz before the polishing was 5 $\mu$m while the surface roughness Rz after the polishing was 1.6 $\mu$m . On the other hand, the punch was not particularly polished. The surface roughness Rz of the punch was 5 $\mu$m.

(2) Example 1-5

A grindstone of a granularity of the grinding abrasive of #800 (JIS R6001) was used to polish the surface of the die. The surface roughness Rz before the polishing was 5 $\mu$m while the surface roughness Rz after the polishing was 0.9 $\mu$m. On the other hand, the punch was not particularly polished. The surface roughness Rz of the punch was 5 $\mu$m.

(3) Example 1-6

A grindstone of a granularity of the grinding abrasive of #1500 (JIS R6001) was used to polish the surface of the die. The surface roughness Rz before the polishing was 5 $\mu$m while the surface roughness Rz after the polishing was 0.5 $\mu$m. On the other hand, the punch was not particularly polished. The surface roughness Rz of the punch was 5 $\mu$m.

(4) Comparative Example 1-4

A grindstone of a granularity of the grinding abrasive of #230 (JIS R6001) was used to polish the surface of the punch. The surface roughness Rz before the polishing was 5 $\mu$m while the surface roughness Rz after the polishing was 1.6 $\mu$m. On the other hand, the die was not particularly polished. The surface roughness Rz of the die was 5 $\mu$m.

(5) Comparative Example 1-5

A grindstone of a granularity of the grinding abrasive of #800 (JIS R6001) was used to polish the surface of the punch. The surface roughness Rz before the polishing was 5 $\mu$m while the surface roughness Rz after the polishing was 0.9 $\mu$m. On the other hand, the die was not particularly polished. The surface roughness Rz of the die was 5 $\mu$m.

(6) Comparative Example 1-6

A grindstone of a granularity of the grinding abrasive of #1500 (JIS R6001) was used to polish the surface of the punch. The surface roughness Rz before the polishing was 5 $\mu$m while the surface roughness Rz after the polishing was 0.5 $\mu$m. On the other hand, the die was not particularly polished. The surface roughness Rz of the die was 5 $\mu$m.

2.1.3 Study of Peeling Life of Coating

Before shearing the steel sheet, at least one of the punch and die was coated like in the following Examples 1-7 and 1-8 and Comparative Examples 1-7 to 1-9.

(1) Examples 1-7 and 1-8

The punch was given an TiN coating while the die was given an N+TiN coating.

(2) Comparative Example 1-7

The punch and die were given TiN coatings.

(3) Comparative Example 1-8

The punch and die were given N+TiCN coatings.

(4) Comparative Example 1-9

The punch was given an N+TiN coating while the die was given a TiN coating.

2.1.4 Evaluation Conditions

(1) Measurement of Coefficients of Friction of Front End Parts

The coefficients of friction of the front end parts of the punch and die were measured. Further, for Examples 1-7 and Comparative Examples 1-7 to 1-9, the coefficients of friction of the front end parts of the punch and die after punching steel sheets 10,000 times were measured. At that time, in Example 1-7 and Comparative Example 1-7 and 1-9, about 90% of the areas of the TiN coatings were peeled off. Further, in Example 1-8, the coefficients of friction of the front end parts of the punch and die after punching the steel sheets 1000 times were measured. At this time, in Example 1-8, about 30% of the areas of the TiN coatings were peeled off.

(2) Residual Stress of Sheared Edge

The workpieces of Examples 1-1 to 1-8 and Comparative Examples 1-1 to 1-9 were measured for residual stress of the sheared edges in the following way. That is, at the center position in the sheet thickness direction, the residual stress was measured by X-rays by a spot diameter of $\phi 500$ $\mu$m (three different locations in the sheet width direction). The direction of measurement of the residual stress was made the three directions of the sheet thickness direction, sheet width direction, and the 45° direction from the sheet thickness direction. For calculation of the residual stress, the $\sin^2 \psi$ method was used. The residual stress in the edge logarithmic direction was assumed to be zero and the maximum main stresses were calculated from the calculated residual stresses of the three directions. The values of the maximum main stresses calculated at the three locations were averaged.

2.1.5 Results of Evaluation

The results of evaluation are shown in the following Tables 2 to 4.

[Table 2]

| | Coefficient of friction of punch front end part | Coefficient of friction of die front end part | Tensile residual stress of fractured surface of workpiece (steel sheet A1: 1470 MPa class, 1.6 mm thickness) | Tensile residual stress of fractured surface of workpiece (steel sheet B: 980 MPa class, 1.6 mm thickness) | Tensile residual stress of fractured surface of workpiece (steel sheet C: 590 MPa class, 1.6 mm thickness) | Tensile residual stress of fractured surface of workpiece (steel sheet A2: 1470 MPa class, 0.8 mm thickness) | Tensile residual stress of fractured surface of workpiece (steel sheet A3: 1470 MPa class, 4.0 mm thickness) |
|---|---|---|---|---|---|---|---|
| Ex. 1-1 | 0.45 | 0.11 | 995 | 662 | 291 | 915 | 1085 |
| Ex. 1-2 | 0.45 | 0.19 | 1119 | 705 | 296 | 1021 | 1233 |
| Ex. 1-3 | 0.45 | 0.29 | 1153 | 786 | 350 | 1062 | 1223 |
| Comp. Ex. 1-1 | 0.11 | 0.45 | 1815 | 1146 | 533 | 1730 | 1820 |
| Comp. Ex 1-2 | 0.45 | 0.45 | 1464 | 889 | 381 | 1388 | 1542 |
| Comp. Ex 1-3 | 0.29 | 0.29 | 1343 | 886 | 371 | 1223 | 1421 |

[Table 3]

| | Coefficient of friction of punch front end part | Coefficient of friction of die front end part | Tensile residual stress of fractured surface of workpiece (steel sheet A1: 1470 MPa class, 1.6 mm thickness) | Tensile residual stress of fractured surface of workpiece (steel sheet B: 980 MPa class, 1.6 mm thickness) | Tensile residual stress of fractured surface of workpiece (steel sheet C: 590 MPa class, 1.6 mm thickness) | Tensile residual stress of fractured surface of workpiece (steel sheet A2: 1470 MPa class, 0.8 mm thickness) | Tensile residual stress of fractured surface of workpiece (steel sheet A3: 1470 MPa class, 4.0 mm thickness) |
|---|---|---|---|---|---|---|---|
| Ex. 1-4 | 0.45 | 0.29 | 1204 | 803 | 355 | 1058 | 1288 |
| Ex. 1-5 | 0.45 | 0.25 | 1139 | 737 | 315 | 1021 | 1232 |
| Ex. 1-6 | 0.45 | 0.21 | 1155 | 787 | 347 | 1065 | 1267 |
| Comp. Ex. 1-4 | 0.31 | 0.45 | 1542 | 1024 | 462 | 1422 | 1622 |
| Comp. Ex. 1-5 | 0.24 | 0.45 | 1715 | 1049 | 479 | 1600 | 1805 |
| Comp. Ex. 1-6 | 0.20 | 0.45 | 1752 | 1166 | 549 | 1644 | 1842 |

[Table 4]

| | Coefficient of friction of punch front end part | Coefficient of friction of die front end part | Tensile residual stress of fractured surface of workpiece (steel sheet A1: 1470 MPa class, 1.6 mm thickness) | Tensile residual stress of fractured surface of workpiece (steel sheet B: 980 MPa class, 1.6 mm thickness) | Tensile residual stress of fractured surface of workpiece (steel sheet C: 590 MPa class, 1.6 mm thickness) | Tensile residual stress of fractured surface of workpiece (steel sheet A2: 1470 MPa class, 0.8 mm thickness) | Tensile residual stress of fractured surface of workpiece (steel sheet A3: 1470 MPa class, 4.0 mm thickness) |
|---|---|---|---|---|---|---|---|
| Ex. 1-7 | 0.46 | 0.31 | 1190 | 828 | 373 | 1035 | 1287 |
| Comp. Ex. 1-7 | 0.47 | 0.48 | 1358 | 951 | 451 | 1212 | 1451 |
| Comp. Ex. 1-8 | 0.31 | 0.31 | 1431 | 975 | 461 | 1277 | 1537 |
| Comp. Ex. 1-9 | 0.31 | 0.47 | 1628 | 1113 | 557 | 1455 | 1734 |
| Ex. 1-8 | 0.37 | 0.31 | 1320 | 935 | 441 | 1170 | 1420 |

As shown in Tables 2 to 4, it is learned that if using a shearing apparatus with a coefficient of friction of the front end part of the punch larger than the coefficient of friction of the front end part of the die to shear a steel sheet, at the sheared edge of the workpiece obtained after shearing, it is possible to remarkably reduce the tensile residual stress of the fractured surface. It is believed that this is because at the fractured surface of the workpiece, it was possible to raise the area ratio of the first part derived from the first crack propagating from the punch. Such an effect is deemed to be similar regardless of the strength of the steel sheet. Further, at the sheared edge of steel sheet B of Example 1-1, when measuring the area ratio of the fractured surface, the area ratio of the fractured surface was 70% based on the product of the cut length and cut thickness (sheet thickness) of the steel sheet B (cut length × sheet thickness) (100 area%). Further, at the sheared edges of the steel sheets B of Examples 1-2 to 1-8 and the sheared edges of the steel sheets A1 to A3 of Examples 1-1 to 1-8, the area ratios of the fractured surfaces were equal to that of the steel sheet B of Example 1-1 or larger area ratios than that. In this way, if the ratio of the fractured surface in the sheared edge is large, it is believed that a higher effect is obtained by reducing the tensile residual stress.

Further, in the above embodiment, an example of use of steel sheet as the workpiece was illustrated, but the art of the present disclosure is not limited to this example. The art of the present disclosure, as explained above, is characterized by the point of adjusting the coefficient of friction of the cutting blades of the shearing apparatus. Similar effects can be exhibited regardless of the shape of the workpiece.

2.2 Second Embodiment

2.2.1 Second-1 Embodiment

A shearing apparatus such as shown in FIGS. 12 to 14 was used to shear a workpiece. As the workpiece, a steel sheet with a sheet thickness of 1.6 mm and a tensile strength of the 1180 MPa class was used. The steel sheet was placed between a punch and die and the punch and die were made to relatively move so as to shear off one part of the steel sheet by the punch straight and obtain a workpiece having a sheared edge. At the sheared edge, a rollover was formed at the punch side and a burr was formed at the die side. The shear angle between the punch and die was changed in various ways. The clearance was made 10% of the sheet thickness.

As shown in the following Table 5, the shear angle $\alpha$ was set to nine values of 0°, 1°, 2°, 3°, 4°, 5°, 6°, 8°, and 10° and, in the case of the values of the shear angle $\alpha$, the first difference of inclination angle $\Delta CA$ was set to the five values of 0°, 10°, 20°, 30°, and 40°. Further, at different patterns of combination of the shear angle $\alpha$ and first difference of inclination angle $\Delta CA$, the tensile residual stresses of the edges of the products of the sheared steel sheets were measured. Further, the tensile residual stress in the case of the first difference of inclination angle $\Delta CA=0°$ was set as a reference value at nine shear angles $\alpha$. Further, the tensile residual stresses measured in the case of a first difference of inclination angle $\Delta CA$ of 10°, 20°, 30°, and 40° were compared with the reference values at the corresponding shear angles $\alpha$ to evaluate the sheared edges of the steel materials.

[Table 5]

| Result of evaluation | | Shear angle $\alpha$ [°] | | | | | | | | |
|---|---|---|---|---|---|---|---|---|---|---|
| | | 0 | 1 | 2 | 3 | 4 | 5 | 6 | 8 | 10 |
| First difference of inclination angle $\Delta CA$ [°] | 10 | B | B | B | A | A | A | C | C | D |
| | 20 | B | B | B | A | A | A | B | C | C |
| | 30 | B | B | B | A | A | A | B | B | C |
| | 40 | B | B | B | A | A | A | A | B | B |

[Table 6]

| No. | Tensile strength of steel sheet [MPa] | Radius of curvature R2 [mm] | Radius of curvature R1 [mm] | Inclination angle C2 [°] | Inclination angle C1 [°] | Difference of radius of curvature ΔR [mm] | First difference of inclination angle ΔCA [°] | Total difference of inclination angle ΔCT [°] | Shear angle $\alpha$ [°] | Lower limit formula ($0.15 \times \alpha^2 + 0.05 \times \alpha + 1$) | ΔCT/Lower limit formula | Result of evaluation |
|---|---|---|---|---|---|---|---|---|---|---|---|---|
| 1 | 1180 | - | - | - | 10 | 0 | 10 | 10 | 0 | 1 | 10 | B |
| 2 | 1180 | - | - | - | 10 | 0 | 10 | 10 | 1 | 1.2 | 8.3333 | B |
| 3 | 1180 | - | - | - | 10 | 0 | 10 | 10 | 2 | 1.7 | 5.8824 | B |
| 4 | 1180 | - | - | - | 10 | 0 | 10 | 10 | 3 | 2.5 | 4 | A |
| 5 | 1180 | - | - | - | 10 | 0 | 10 | 10 | 4 | 3.6 | 2.7778 | A |
| 6 | 1180 | - | - | - | 10 | 0 | 10 | 10 | 5 | 5 | 2 | A |
| 7 | 1180 | - | - | - | 10 | 0 | 10 | 10 | 6 | 6.7 | 1.4925 | C |
| 8 | 1180 | - | - | - | 10 | 0 | 10 | 10 | 8 | 11 | 0.9091 | C |
| 9 | 1180 | - | - | - | 10 | 0 | 10 | 10 | 10 | 16.5 | 0.6061 | D |
| 10 | 1180 | - | - | - | 20 | 0 | 20 | 20 | 0 | 1 | 20 | B |
| 11 | 1180 | - | - | - | 20 | 0 | 20 | 20 | 1 | 1.2 | 16.667 | B |
| 12 | 1180 | - | - | - | 20 | 0 | 20 | 20 | 2 | 1.7 | 11.765 | B |
| 13 | 1180 | - | - | - | 20 | 0 | 20 | 20 | 3 | 2.5 | 8 | A |
| 14 | 1180 | - | - | - | 20 | 0 | 20 | 20 | 4 | 3.6 | 5.5556 | A |
| 15 | 1180 | - | - | - | 20 | 0 | 20 | 20 | 5 | 5 | 4 | A |
| 16 | 1180 | - | - | - | 20 | 0 | 20 | 20 | 6 | 6.7 | 2.9851 | B |
| 17 | 1180 | - | - | - | 20 | 0 | 20 | 20 | 8 | 11 | 1.8182 | C |
| 18 | 1180 | - | - | - | 20 | 0 | 20 | 20 | 10 | 16.5 | 1.2121 | C |
| 19 | 1180 | - | - | - | 30 | 0 | 30 | 30 | 0 | 1 | 30 | B |
| 20 | 1180 | - | - | - | 30 | 0 | 30 | 30 | 1 | 1.2 | 25 | B |
| 21 | 1180 | - | - | - | 30 | 0 | 30 | 30 | 2 | 1.7 | 17.647 | B |
| 22 | 1180 | - | - | - | 30 | 0 | 30 | 30 | 3 | 2.5 | 12 | A |
| 23 | 1180 | - | - | - | 30 | 0 | 30 | 30 | 4 | 3.6 | 8.3333 | A |

(continued)

| No. | Tensile strength of steel sheet [MPa] | Radius of curvature R2 [mm] | Radius of curvature R1 [mm] | Inclination angle C2 [°] | Inclination angle C1 [°] | Difference of radius of curvature $\Delta R$ [mm] | First difference of inclination angle $\Delta CA$ [°] | Total difference of inclination angle $\Delta CT$ [°] | Shear angle $\alpha$ [°] | Lower limit formula ($0.15 \times \alpha^2 + 0.05 \times \alpha +1$) | $\Delta CT$/Lower limit formula | Result of evaluation |
|---|---|---|---|---|---|---|---|---|---|---|---|---|
| 24 | 1180 | - | - | - | 30 | 0 | 30 | 30 | 5 | 5 | 6 | A |
| 25 | 1180 | - | - | - | 30 | 0 | 30 | 30 | 6 | 6.7 | 4.4776 | B |
| 26 | 1180 | - | - | - | 30 | 0 | 30 | 30 | 8 | 11 | 2.7273 | B |
| 27 | 1180 | - | - | - | 30 | 0 | 30 | 30 | 10 | 16.5 | 1.8182 | C |
| 28 | 1180 | - | - | - | 40 | 0 | 40 | 40 | 0 | 1 | 40 | B |
| 29 | 1180 | - | - | - | 40 | 0 | 40 | 40 | 1 | 1.2 | 33.333 | B |
| 30 | 1180 | - | - | - | 40 | 0 | 40 | 40 | 2 | 1.7 | 23.529 | B |
| 31 | 1180 | - | - | - | 40 | 0 | 40 | 40 | 3 | 2.5 | 16 | A |
| 32 | 1180 | - | - | - | 40 | 0 | 40 | 40 | 4 | 3.6 | 11.111 | A |
| 33 | 1180 | - | - | - | 40 | 0 | 40 | 40 | 5 | 5 | 8 | A |
| 34 | 1180 | - | - | - | 40 | 0 | 40 | 40 | 6 | 6.7 | 5.9701 | A |
| 35 | 1180 | - | - | - | 40 | 0 | 40 | 40 | 8 | 11 | 3.6364 | B |
| 36 | 1180 | - | - | - | 40 | 0 | 40 | 40 | 10 | 16.5 | 2.4242 | B |

[Table 7]

| No. | Tensile strength of steel sheet [MPa] | Radius of curvature R2 [mm] | Radius of curvature Rl [mm] | Inclination angle C2 [°] | Inclination angle C1 [°] | Difference of radius of curvature ΔR [mm] | First difference of inclination angle ΔCA [°] | Total difference of inclination angle ΔCT [°] | Shear angle $\alpha$ [°] | Lower limit formula ($0.15 \times \alpha^2 + 0.05 \times \alpha + 1$) | ΔCT/Lower limit formula | Result of evaluation |
|---|---|---|---|---|---|---|---|---|---|---|---|---|
| 1 | 1180 | - | - | 20 | 30 | 0 | 10 | 10 | 0 | 1 | 10 | B |
| 2 | 1180 | - | - | 20 | 30 | 0 | 10 | 10 | 1 | 1.2 | 8.3333 | B |
| 3 | 1180 | - | - | 20 | 30 | 0 | 10 | 10 | 2 | 1.7 | 5.8824 | B |
| 4 | 1180 | - | - | 20 | 30 | 0 | 10 | 10 | 3 | 2.5 | 4 | A |
| 5 | 1180 | - | - | 20 | 30 | 0 | 10 | 10 | 4 | 3.6 | 2.7778 | A |
| 6 | 1180 | - | - | 20 | 30 | 0 | 10 | 10 | 5 | 5 | 2 | A |
| 7 | 1180 | - | - | 20 | 30 | 0 | 10 | 10 | 6 | 6.7 | 1.4925 | C |
| 8 | 1180 | - | - | 20 | 30 | 0 | 10 | 10 | 8 | 11 | 0.9091 | C |
| 9 | 1180 | - | - | 20 | 30 | 0 | 10 | 10 | 10 | 16.5 | 0.6061 | D |
| 10 | 1180 | - | - | 20 | 40 | 0 | 20 | 20 | 0 | 1 | 20 | B |
| 11 | 1180 | - | - | 20 | 40 | 0 | 20 | 20 | 1 | 1.2 | 16.667 | B |
| 12 | 1180 | - | - | 20 | 40 | 0 | 20 | 20 | 2 | 1.7 | 11.765 | B |
| 13 | 1180 | - | - | 20 | 40 | 0 | 20 | 20 | 3 | 2.5 | 8 | A |
| 14 | 1180 | - | - | 20 | 40 | 0 | 20 | 20 | 4 | 3.6 | 5.5556 | A |
| 15 | 1180 | - | - | 20 | 40 | 0 | 20 | 20 | 5 | 5 | 4 | A |
| 16 | 1180 | - | - | 20 | 40 | 0 | 20 | 20 | 6 | 6.7 | 2.9851 | B |
| 17 | 1180 | - | - | 20 | 40 | 0 | 20 | 20 | 8 | 11 | 1.8182 | C |
| 18 | 1180 | - | - | 20 | 40 | 0 | 20 | 20 | 10 | 16.5 | 1.2121 | C |
| 19 | 1180 | - | - | 20 | 50 | 0 | 30 | 30 | 0 | 1 | 30 | B |
| 20 | 1180 | - | - | 20 | 50 | 0 | 30 | 30 | 1 | 1.2 | 25 | B |
| 21 | 1180 | - | - | 20 | 50 | 0 | 30 | 30 | 2 | 1.7 | 17.647 | B |
| 22 | 1180 | - | - | 20 | 50 | 0 | 30 | 30 | 3 | 2.5 | 12 | A |
| 23 | 1180 | - | - | 20 | 50 | 0 | 30 | 30 | 4 | 3.6 | 8.3333 | A |

| No. | Tensile strength of steel sheet [MPa] | Radius of curvature R2 [mm] | Radius of curvature Rl [mm] | Inclination angle C2 [°] | Inclination angle C1 [°] | Difference of radius of curvature ΔR [mm] | First difference of inclination angle ΔCA [°] | Total difference of inclination angle ΔCT [°] | Shear angle α [°] | Lower limit formula ($0.15 \times \alpha^2 + 0.05 \times \alpha + 1$) | ΔCT/Lower limit formula | Result of evaluation |
|---|---|---|---|---|---|---|---|---|---|---|---|---|
| 24 | 1180 | - | - | 20 | 50 | 0 | 30 | 30 | 5 | 5 | 6 | A |
| 25 | 1180 | - | - | 20 | 50 | 0 | 30 | 30 | 6 | 6.7 | 4.4776 | B |
| 26 | 1180 | - | - | 20 | 50 | 0 | 30 | 30 | 8 | 11 | 2.7273 | B |
| 27 | 1180 | - | - | 20 | 50 | 0 | 30 | 30 | 10 | 16.5 | 1.8182 | C |
| 28 | 1180 | - | - | 20 | 60 | 0 | 40 | 40 | 0 | 1 | 40 | B |
| 29 | 1180 | - | - | 20 | 60 | 0 | 40 | 40 | 1 | 1.2 | 33.333 | B |
| 30 | 1180 | - | - | 20 | 60 | 0 | 40 | 40 | 2 | 1.7 | 23.529 | B |
| 31 | 1180 | - | - | 20 | 60 | 0 | 40 | 40 | 3 | 2.5 | 16 | A |
| 32 | 1180 | - | - | 20 | 60 | 0 | 40 | 40 | 4 | 3.6 | 11.111 | A |
| 33 | 1180 | - | - | 20 | 60 | 0 | 40 | 40 | 5 | 5 | 8 | A |
| 34 | 1180 | - | - | 20 | 60 | 0 | 40 | 40 | 6 | 6.7 | 5.9701 | A |
| 35 | 1180 | - | - | 20 | 60 | 0 | 40 | 40 | 8 | 11 | 3.6364 | B |
| 36 | 1180 | - | - | 20 | 60 | 0 | 40 | 40 | 10 | 16.5 | 2.4242 | B |

EP 4 474 086 A1

Table 5 shows the results of evaluation of the tensile residual stress of the steel sheet obtained when changing the difference of inclination angle and the shear angle of the cutting edge at the shearing apparatus for shearing. Table 6 and Table 7 are tables for explaining the specific parameters of the 36 examples in Table 5. Specifically Table 6 is an example of the case where a first difference of inclination angle ΔCA is formed by just the value of the inclination angle C1. Further, Table 7 is an example of the case where a first difference of inclination angle ΔCA is formed by the difference of the inclination angle C1 and the inclination angle C2.

Further, in Tables 6 and 7 and the following tables, "-" entered as values for the radius of curvature R1 and the radius of curvature R2 means the cutting edge is not intentionally provided with a radius of curvature, that is, the cutting edge is a right angle blade. Further, in Tables 6 and 7 and the following tables, "-" entered as value for the inclination angle C1 and the inclination angle C2 means chamfering is not intentionally provided, that is, the cutting edge is a right angle blade.

Further, the "Lower limit formula" of the third column from the right side at the topmost row in Table 6 and Table 7 is the formula of $(0.15 \times \alpha2 + 0.05 \times \alpha + 1)$ at the left side of the above relationship (I). For this reason, if the value of the "ΔCT/Lower limit formula" of the second column from the right side at the topmost row in Table 6 and Table 7 is more than 1, it means that the total difference of the inclination angle ΔCT satisfies the condition of the lower limit defined by the left side of the above relationship (I).

In Table 5, "A" at the "Result of evaluation" of the rightmost side means the tensile residual stress fell by 20% or more from the reference value. Further, "B" means the tensile residual stress fell by 10% or more and less than 20% from the reference value. Further, "C" means the tensile residual stress fell by 5% or more and less than 10% from the reference value. Further, "D" means the tensile residual stress fell by less than 5% from the reference value.

For example, if the shear angle α is 0°, the tensile residual stress falls by 10% or more at all steel sheets measured regardless of the first difference of inclination angle ΔCA. On the other hand, if the shear angle α is 10°, it is learned that the amount of drop of the tensile residual stress differs depending on the magnitude of the first difference of inclination angle ΔCA. If the shear angle α is 10°, the amount of drop of the tensile residual stress was greater when the first difference of inclination angle ΔCA was 20° compared to when the first difference of inclination angle ΔCA was 10°. Further, the amount of drop of the tensile residual stress was greater when the first difference of inclination angle ΔCA was 40° compared to when the first difference of inclination angle ΔCA was 20°.

Further, if the shear angle α was 3° to 5°, in all of the cases where the first differences of inclination angle ΔCA were 10°, 20°, 30° and 40°, it was learned that the superior effect was obtained of the respective tensile residual stresses falling 20% or more from the reference values. Further, even if the shear angle α was 6°, in the case where the first difference of inclination angle ΔCA was 40°, similarly it was learned that the superior effect was obtained of the tensile residual stress falling 20% or more from the reference values. Further, as shown in Table 6 and Table 7, it was learned that regardless of the presence of any inclination angle C2, a similar effect is obtained if the first difference of inclination angle ΔCA is the same between the inclination angle C1 and the inclination angle C2.

As explained above, if the first front end part and the second front end part are configured so that the first difference of inclination angle ΔCA satisfies the formula (3) in accordance with the shear angle α at the time of shearing, it becomes possible to promote propagation of a crack from the surface of the steel sheet at the punch side used as the first cutting blade at the time of shearing. By promoting propagation of a crack from the surface of the steel sheet at the punch side, it is possible to suppress tensile residual stress at the edge of the steel sheet of the product remaining on the die after shearing.

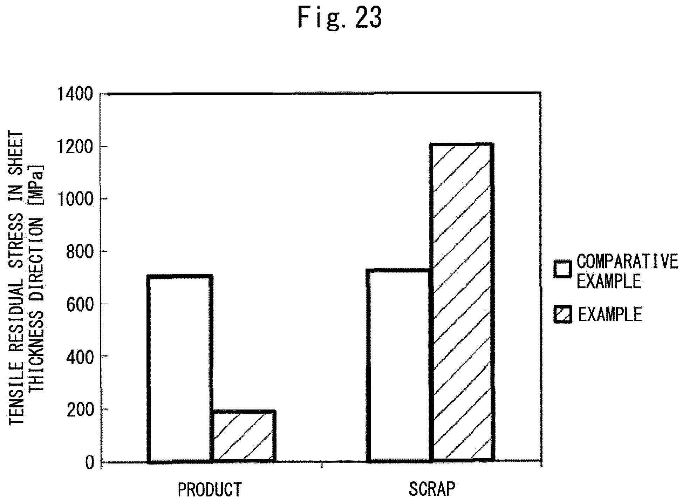

FIG. 23 illustrates the results of measurement (experimental) by X-rays of the tensile residual stress measured along the direction of relative movement Y (sheet thickness direction) at the edges of the product and scrap after shearing. Note that the conditions at the time of X-ray measurement are the same as the conditions used at the time of the results of evaluation explained in Table 5.

As shown in FIG. 23, in the direction of relative movement Y, the tensile residual stress of the scrap was about 1200 MPa, while the tensile residual stress of the product was kept to a low one of about 200 MPa.

On the other hand, as a comparative example, the shearing was performed using a shearing apparatus with a first front end part and second front end part configured so that the first difference of inclination angle ΔCA does not satisfy formula (3). Specifically, the shearing apparatus according to a comparative example so that the inclination angle C1=inclination angle C2 and the first difference of inclination angle ΔCA=0. In the shearing apparatus according to a comparative example, the conditions other than the first difference of inclination angle ΔCA were set in the same way as the above case, including the magnitude of the shear angle α.

In the case of the comparative example, a cross-section of an end part of the steel sheet in the middle of shearing was examined. As a result, formation of cracks from both sides of the punch and die and propagation of the cracks were confirmed. Further, in the direction of relative movement Y, the tensile residual stress of the product was about 700 MPa. This was a magnitude of about 3.5 times the above approximately 200 MPa.

2.2.2 Second-2 Embodiment

A shearing apparatus such as shown in FIG. 17 was used to shear a workpiece. As the workpiece, a steel sheet with a sheet thickness of 1.6 mm and a tensile strength of the 1180 MPa class was used. The steel sheet was placed between a punch and die and the punch and die were made to relatively move so as to shear off one part of the steel sheet by the punch straight and obtain a workpiece having a sheared edge. At the sheared edge, a rollover was formed at the punch side and a burr was formed at the die side. The shear angle between the punch and die was changed in various ways. The clearance was made 10% of the sheet thickness.

As shown in the following Table 8, the shear angle $\alpha$ was set to nine values of 0°, 1°, 2°, 3°, 4°, 5°, 6°, 8°, and 10°. Further, in the case of the values of the shear angle $\alpha$, the difference of radius of curvature $\Delta R$ was set to the six values of 0 mm, 0.1 mm, 0.125 mm, 0.25 mm, 0.375 mm, and 0.5 mm. Further, at different patterns of combination of the shear angle $\alpha$ and difference of radius of curvature $\Delta R$, the tensile residual stresses of the edges of the sheared steel materials were measured.

Further, the tensile residual stress in the case of the difference of radius of curvature $\Delta R=0$ mm was set as a reference value at nine shear angles $\alpha$. Further, the tensile residual stresses measured in the case of a difference of radius of curvature $\Delta R$ of 0.1 mm, 0.125 mm, 0.25 mm, 0.375 mm, and 0.5 mm were compared with the reference values at the corresponding shear angles $\alpha$ to evaluate the sheared edges of the steel materials.

[Table 8]

| Result of evaluation | | Shear angle $\alpha$ [°] | | | | | | | | |
|---|---|---|---|---|---|---|---|---|---|---|
| | | 0 | 1 | 2 | 3 | 4 | 5 | 6 | 8 | 10 |
| Difference of radius of curvature $\Delta R$ [mm] | 0.1 | B | B | B | A | A | A | C | D | D |
| | 0.125 | B | B | B | A | A | A | C | D | D |
| | 0.25 | B | B | B | A | A | A | B | C | C |
| | 0.375 | B | B | B | A | A | A | B | B | C |
| | 0.5 | B | B | B | A | A | A | A | B | B |

[Table 9]

| No. | Tensile strength of steel sheet [MPa] | Radius of curvature R2 [mm] | Radius of curvature Rl [mm] | Inclination angle C2 [°] | Inclination angle C1 [°] | Difference of radius of curvature ΔR [mm] | First difference of inclination angle ΔCA [°] | Total difference of inclination angle ΔCT [°] | Shear angle α [°] | Lower limit formula (0.15 x α² + 0.05X α+1) | ΔCT/Lower limit formula | Result of evaluation |
|---|---|---|---|---|---|---|---|---|---|---|---|---|
| 1 | 1180 | - | 0.1 | - | - | 0.1 | 0 | 8 | 0 | 1 | 8 | B |
| 2 | 1180 | - | 0.1 | - | - | 0.1 | 0 | 8 | 1 | 1.2 | 6.6667 | B |
| 3 | 1180 | - | 0.1 | - | - | 0.1 | 0 | 8 | 2 | 1.7 | 4.7059 | B |
| 4 | 1180 | - | 0.1 | - | - | 0.1 | 0 | 8 | 3 | 2.5 | 3.2 | A |
| 5 | 1180 | - | 0.1 | - | - | 0.1 | 0 | 8 | 4 | 3.6 | 2.2222 | A |
| 6 | 1180 | - | 0.1 | - | - | 0.1 | 0 | 8 | 5 | 5 | 1.6 | A |
| 7 | 1180 | - | 0.1 | - | - | 0.1 | 0 | 8 | 6 | 6.7 | 1.1940 | C |
| 8 | 1180 | - | 0.1 | - | - | 0.1 | 0 | 8 | 8 | 11 | 0.7273 | D |
| 9 | 1180 | - | 0.1 | - | - | 0.1 | 0 | 8 | 10 | 16.5 | 0.4848 | D |
| 10 | 1180 | - | 0.125 | - | - | 0.125 | 0 | 10 | 0 | 1 | 10 | B |
| 11 | 1180 | - | 0.125 | - | - | 0.125 | 0 | 10 | 1 | 1.2 | 8.3333 | B |
| 12 | 1180 | - | 0.125 | - | - | 0.125 | 0 | 10 | 2 | 1.7 | 5.8824 | B |
| 13 | 1180 | - | 0.125 | - | - | 0.125 | 0 | 10 | 3 | 2.5 | 4 | A |
| 14 | 1180 | - | 0.125 | - | - | 0.125 | 0 | 10 | 4 | 3.6 | 2.7778 | A |
| 15 | 1180 | - | 0.125 | - | - | 0.125 | 0 | 10 | 5 | 5 | 2 | A |
| 16 | 1180 | - | 0.125 | - | - | 0.125 | 0 | 10 | 6 | 6.7 | 1.4925 | C |
| 17 | 1180 | - | 0.125 | - | - | 0.125 | 0 | 10 | 8 | 11 | 0.9091 | D |
| 18 | 1180 | - | 0.125 | - | - | 0.125 | 0 | 10 | 10 | 16.5 | 0.6061 | D |
| 19 | 1180 | - | 0.25 | - | - | 0.25 | 0 | 20 | 0 | 1 | 20 | B |
| 20 | 1180 | - | 0.25 | - | - | 0.25 | 0 | 20 | 1 | 1.2 | 16.667 | B |
| 21 | 1180 | - | 0.25 | - | - | 0.25 | 0 | 20 | 2 | 1.7 | 11.765 | B |
| 22 | 1180 | - | 0.25 | - | - | 0.25 | 0 | 20 | 3 | 2.5 | 8 | A |
| 23 | 1180 | - | 0.25 | - | - | 0.25 | 0 | 20 | 4 | 3.6 | 5.5556 | A |

EP 4 474 086 A1

(continued)

| No. | Tensile strength of steel sheet [MPa] | Radius of curvature R2 [mm] | Radius of curvature Rl [mm] | Inclination angle C2 [°] | Inclination angle C1 [°] | Difference of radius of curvature ΔR [mm] | First difference of inclination angle ΔCA [°] | Total difference of inclination angle ΔCT [°] | Shear angle α [°] | Lower limit formula $(0.15 \times \alpha^2 + 0.05X \alpha+1)$ | ΔCT/Lower limit formula | Result of evaluation |
|---|---|---|---|---|---|---|---|---|---|---|---|---|
| 24 | 1180 | - | 0.25 | - | - | 0.25 | 0 | 20 | 5 | 5 | 4 | A |
| 25 | 1180 | - | 0.25 | - | - | 0.25 | 0 | 20 | 6 | 6.7 | 2.9851 | B |
| 26 | 1180 | - | 0.25 | - | - | 0.25 | 0 | 20 | 8 | 11 | 1.8182 | C |
| 27 | 1180 | - | 0.25 | - | - | 0.25 | 0 | 20 | 10 | 16.5 | 1.2121 | C |
| 28 | 1180 | - | 0.375 | - | - | 0.375 | 0 | 30 | 0 | 1 | 30 | B |
| 29 | 1180 | - | 0.375 | - | - | 0.375 | 0 | 30 | 1 | 1.2 | 25 | B |
| 30 | 1180 | - | 0.375 | - | - | 0.375 | 0 | 30 | 2 | 1.7 | 17.647 | B |
| 31 | 1180 | - | 0.375 | - | - | 0.375 | 0 | 30 | 3 | 2.5 | 12 | A |
| 32 | 1180 | - | 0.375 | - | - | 0.375 | 0 | 30 | 4 | 3.6 | 8.3333 | A |
| 33 | 1180 | - | 0.375 | - | - | 0.375 | 0 | 30 | 5 | 5 | 6 | A |
| 34 | 1180 | - | 0.375 | - | - | 0.375 | 0 | 30 | 6 | 6.7 | 4.4776 | B |
| 35 | 1180 | - | 0.375 | - | - | 0.375 | 0 | 30 | 8 | 11 | 2.7273 | B |
| 36 | 1180 | - | 0.375 | - | - | 0.375 | 0 | 30 | 10 | 16.5 | 1.8182 | C |
| 37 | 1180 | - | 0.5 | - | - | 0.5 | 0 | 40 | 0 | 1 | 40 | B |
| 38 | 1180 | - | 0.5 | - | - | 0.5 | 0 | 40 | 1 | 1.2 | 33.333 | B |
| 39 | 1180 | - | 0.5 | - | - | 0.5 | 0 | 40 | 2 | 1.7 | 23.529 | B |
| 40 | 1180 | - | 0.5 | - | - | 0.5 | 0 | 40 | 3 | 2.5 | 16 | A |
| 41 | 1180 | - | 0.5 | - | - | 0.5 | 0 | 40 | 4 | 3.6 | 11.111 | A |
| 42 | 1180 | - | 0.5 | - | - | 0.5 | 0 | 40 | 5 | 5 | 8 | A |
| 43 | 1180 | - | 0.5 | - | - | 0.5 | 0 | 40 | 6 | 6.7 | 5.9701 | A |
| 44 | 1180 | - | 0.5 | - | - | 0.5 | 0 | 40 | 8 | 11 | 3.6364 | B |
| 45 | 1180 | - | 0.5 | - | - | 0.5 | 0 | 40 | 10 | 16.5 | 2.4242 | B |

[Table 10]

| No. | Tensile strength of steel sheet [MPa] | Radius of curvature R2 [mm] | Radius of curvature Rl [mm] | Inclination angle C2 [°] | Inclination angle C1 [°] | Difference of radius of curvature ΔR [mm] | First difference of inclination angle ΔCA [°] | Total difference of inclination angle ΔCT [°] | Shear angle α [°] | Lower limit formula (0.15 x α²+ 0.05X α+1) | ΔCT/Lower limit formula | Result of evaluation |
|---|---|---|---|---|---|---|---|---|---|---|---|---|
| 1 | 1180 | 0.15 | 0.25 | - | - | 0.1 | 0 | 8 | 0 | 1 | 8 | B |
| 2 | 1180 | 0.15 | 0.25 | - | - | 0.1 | 0 | 8 | 1 | 1.2 | 6.6667 | B |
| 3 | 1180 | 015 | 0.25 | - | - | 0.1 | 0 | 8 | 2 | 1.7 | 4.7059 | B |
| 4 | 1180 | 0.15 | 0.25 | - | - | 0.1 | 0 | 8 | 3 | 2.5 | 3.2 | A |
| 5 | 1180 | 0.15 | 0.25 | - | - | 0.1 | 0 | 8 | 4 | 3.6 | 2.2222 | A |
| 6 | 1180 | 0.15 | 0.25 | - | - | 0.1 | 0 | 8 | 5 | 5 | 1.6 | A |
| 7 | 1180 | 0.15 | 0.25 | - | - | 0.1 | 0 | 8 | 6 | 6.7 | 1.1940 | C |
| 8 | 1180 | 0.15 | 0.25 | - | - | 0.1 | 0 | 8 | 8 | 11 | 0.7273 | D |
| 9 | 1180 | 0.15 | 0.25 | - | - | 0.1 | 0 | 8 | 10 | 16.5 | 0.4848 | D |
| 10 | 1180 | 0.15 | 0.275 | - | - | 0.125 | 0 | 10 | 0 | 1 | 10 | B |
| 11 | 1180 | 0.15 | 0.275 | - | - | 0.125 | 0 | 10 | 1 | 1.2 | 8.3333 | B |
| 12 | 1180 | 0.15 | 0.275 | - | - | 0.125 | 0 | 10 | 2 | 1.7 | 5.8824 | B |
| 13 | 1180 | 0.15 | 0.275 | - | - | 0.125 | 0 | 10 | 3 | 2.5 | 4 | A |
| 14 | 1180 | 0.15 | 0.275 | - | - | 0.125 | 0 | 10 | 4 | 3.6 | 2.7778 | A |
| 15 | 1180 | 0.15 | 0.275 | - | - | 0.125 | 0 | 10 | 5 | 5 | 2 | A |
| 15 | 1180 | 015 | 0.275 | - | - | 0.125 | 0 | 10 | 6 | 6.7 | 1.4925 | C |
| 17 | 1180 | 0.15 | 0.275 | - | - | 0.125 | 0 | 10 | 8 | 11 | 0.9091 | D |
| 18 | 1180 | 0.15 | 0.275 | - | - | 0.125 | 0 | 10 | 10 | 16.5 | 0.6061 | D |
| 19 | 1180 | 0.15 | 0.4 | - | - | 0.25 | 0 | 20 | 0 | 1 | 20 | B |
| 20 | 1180 | 0.15 | 0.4 | - | - | 0.25 | 0 | 20 | 1 | 1.2 | 16.667 | B |
| 21 | 1180 | 0.15 | 0.4 | - | - | 0.25 | 0 | 20 | 2 | 1.7 | 11.765 | B |
| 22 | 1180 | 0.15 | 0.4 | - | - | 0.25 | 0 | 20 | 3 | 2.5 | 8 | A |
| 23 | 1180 | 0.15 | 0.4 | - | - | 0.25 | 0 | 20 | 4 | 3.6 | 5.5556 | A |

EP 4 474 086 A1

(continued)

| No. | Tensile strength of steel sheet [MPa] | Radius of curvature R2 [mm] | Radius of curvature Rl [mm] | Inclination angle C2 [°] | Inclination angle C1 [°] | Difference of radius of curvature ΔR [mm] | First difference of inclination angle ΔCA [°] | Total difference of inclination angle ΔCT [°] | Shear angle α [°] | Lower limit formula $(0.15 \times \alpha^2 + 0.05X\alpha+1)$ | ΔCT/Lower limit formula | Result of evaluation |
|---|---|---|---|---|---|---|---|---|---|---|---|---|
| 24 | 1180 | 0.15 | 0.4 | - | - | 0.25 | 0 | 20 | 5 | 5 | 4 | A |
| 25 | 1180 | 0.15 | 0.4 | - | - | 0.25 | 0 | 20 | 6 | 6.7 | 2.9851 | B |
| 26 | 1180 | 0.15 | 0.4 | - | - | 0.25 | 0 | 20 | 8 | 11 | 1.8182 | C |
| 27 | 1180 | 0.15 | 0.4 | - | - | 0.25 | 0 | 20 | 10 | 16.5 | 1.2121 | C |
| 28 | 1180 | 0.15 | 0.525 | - | - | 0.375 | 0 | 30 | 0 | 1 | 30 | B |
| 29 | 1180 | 0.15 | 0.525 | - | - | 0.375 | 0 | 30 | 1 | 1.2 | 25 | B |
| 30 | 1180 | 0.15 | 0.525 | - | - | 0.375 | 0 | 30 | 2 | 1.7 | 17.647 | B |
| 31 | 1180 | 0.15 | 0.525 | - | - | 0.375 | 0 | 30 | 3 | 2.5 | 12 | A |
| 32 | 1180 | 0.15 | 0.525 | - | - | 0.375 | 0 | 30 | 4 | 3.6 | 8.3333 | A |
| 33 | 1180 | 0.15 | 0.525 | - | - | 0.375 | 0 | 30 | 5 | 5 | 6 | A |
| 34 | 1180 | 0.15 | 0.525 | - | - | 0.375 | 0 | 30 | 6 | 6.7 | 4.4776 | B |
| 35 | 1180 | 0.15 | 0,525 | - | - | 0.375 | 0 | 30 | 8 | 11 | 2,7273 | B |
| 36 | 1180 | 0.15 | 0.525 | - | - | 0.375 | 0 | 30 | 10 | 16.5 | 1.8182 | C |
| 37 | 1180 | 0.15 | 0.65 | - | - | 0.5 | 0 | 40 | 0 | 1 | 40 | B |
| 38 | 1180 | 0.15 | 0.65 | - | - | 0.5 | 0 | 40 | 1 | 1.2 | 33.333 | B |
| 39 | 1180 | 0.15 | 0.65 | - | - | 0.5 | 0 | 40 | 2 | 1.7 | 23,529 | B |
| 40 | 1180 | 0.15 | 0.65 | - | - | 0.5 | 0 | 40 | 3 | 2.5 | 16 | A |
| 41 | 1180 | 0.15 | 0.65 | - | - | 0.5 | 0 | 40 | 4 | 3.6 | 11.111 | A |
| 42 | 1180 | 0.15 | 0.65 | - | - | 0.5 | 0 | 40 | 5 | 5 | 8 | A |
| 43 | 1180 | 0.15 | 0.65 | - | - | 0.5 | 0 | 40 | 6 | 6.7 | 5.9701 | A |
| 44 | 1180 | 0.15 | 0.65 | - | - | 0.5 | 0 | 40 | 8 | 11 | 3.6364 | B |
| 45 | 1180 | 0.15 | 0.65 | - | - | 0.5 | 0 | 40 | 10 | 16.5 | 2.4242 | B |

Table 8 shows the results of evaluation of the tensile residual stress of steel sheets obtained when shearing at a shearing apparatus while changing the difference of radius of curvature and shear angle of the cutting edge. Table 9 and Table 10 are tables for explaining the specific parameters of the 45 examples in Table 8. Specifically, Table 9 shows examples of the case where the difference of radius of curvature $\Delta R$ is formed by only the value of the radius of curvature R1. Further, Table 10 shows examples of the case where the difference of radius of curvature $\Delta R$ is formed by the difference of the radius of curvature R1 and the radius of curvature R2.

Further, in Table 9 and Table 10, the meanings of the "-" entered as values for the radius of curvature R1 and radius of curvature R2 and the meanings of the "-" entered as values for the inclination angle C1 and inclination angle C2 are both the same as in the cases of Table 6 and Table 7. Further, the meanings of "Lower limit formula" and "$\Delta$CT/Lower limit formula" in Table 9 to Table 10 are the same as the cases of Table 6 and Table 7.

In Table 8, "A" at the "Result of evaluation" of the rightmost side, in the same way as explained in Table 5, means the tensile residual stress fell by 20% or more from the reference value. Further, "B" means the tensile residual stress fell by 10% or more and less than 20% from the reference value. Further, "C" means the tensile residual stress fell by 5% or more and less than 10% from the reference value. Further, "D" means the tensile residual stress fell by less than 5% from the reference value.

For example, if the shear angle $\alpha$ is 0°, the tensile residual stress falls by 10% or more at all steel sheets measured regardless of the magnitude of the difference of radius of curvature $\Delta R$. On the other hand, if the shear angle $\alpha$ is 10°, it is learned that the amount of drop of the tensile residual stress differs depending on the magnitude of the difference of radius of curvature $\Delta R$. If the shear angle $\alpha$ is 10°, the amount of drop of the tensile residual stress was greater when the difference of radius of curvature $\Delta R$ was 0.25 mm compared to when the difference of radius of curvature $\Delta R$ was 0.1 mm and 0.125 mm. Further, the amount of drop of the tensile residual stress was greater when the difference of radius of curvature $\Delta R$ was 0.5 mm compared to when the difference of radius of curvature $\Delta R$ was 0.375 mm.

Further, if the shear angle $\alpha$ was 3° to 5°, in all of the cases where the difference of radius of curvature $\Delta R$ were 0.1 mm, 0.125 mm, 0.25 mm, 0.375 mm, and 0.5 mm, it was learned that the superior effect was obtained of the respective tensile residual stresses falling 20% or more from the reference values. Further, even if the shear angle $\alpha$ was 6°, in the case where the difference of radius of curvature $\Delta R$ was 0.5 mm, similarly it was learned that the superior effect was obtained of the tensile residual stress falling 20% or more from the reference values. Further, as shown in Table 9 and Table 10, it was learned that regardless of the presence of any radius of curvature R2, a similar effect is obtained if the difference of radius of curvature radius of curvature $\Delta R$ is the same between the radius of curvature R1 and radius of curvature R2.

2.2.3 Second-3 Embodiment

A shearing apparatus such as shown in FIG. 19 was used to shear a workpiece. A steel sheet was placed between a punch and die and the punch and die were made to relatively move so as to shear off one part of the steel sheet by the punch straight and obtain a workpiece having a sheared edge. At the sheared edge, a rollover was formed at the punch side and a burr was formed at the die side. The shear angle between the punch and die was changed in various ways. The clearance was made 10% of the sheet thickness.

In the second-3 embodiment as well, in the same way as the second-1 embodiment and the second-2 embodiment, shearing was performed while changing the shear angle $\alpha$ at the shearing apparatus to obtain the results of evaluation of the tensile residual stress of the steel sheet. Specifically, the shear angle $\alpha$ was set to nine values of 0°, 1°, 2°, 3°, 4°, 5°, 6°, 8°, and 10°. Further, the difference of radius of curvature $\Delta R$ was set to 0.1 mm and the difference of inclination angle $\Delta$CA was set to 18°. Further, at different patterns of combination of the nine shear angles $\alpha$, the tensile residual stresses of the edges of the products of the sheared steel sheets 12 were measured.

Further, in the shearing of the second-3 embodiment, as the steel sheet 12, three types of steel sheets of high strength steel sheet with a tensile strength of 1180 MPa, high strength steel sheet with a tensile strength of 980 MPa, and steel sheet with a tensile strength of 590 MPa were used. Results of evaluation of use of high strength steel sheet with a tensile strength of 1180 MPa are shown in Table 11, results of evaluation of use of high strength steel sheet with a tensile strength of 980 MPa are shown in Table 12, and results of evaluation of use of steel sheet of 590 MPa are shown in Table 13 along with specific parameters of the respective nine examples. The other methods of measurement and methods of evaluation at the second-3 embodiment are similar to the case of the second-1 embodiment and second-2 embodiment.

In Tables 11 to 13, "A" at the "Result of evaluation" of the rightmost side, in the same way as explained in Table 5, means the tensile residual stress fell by 20% or more from the reference value. Further, "B" means the tensile residual stress fell by 10% or more and less than 20% from the reference value. Further, "C" means the tensile residual stress fell by 5% or more and less than 10% from the reference value. Further, "D" means the tensile residual stress fell by less than 5% from the reference value.

Note that, in Tables 11 to 13, the meanings of the "-" entered as values for the inclination angle C2 are the same as in the cases of Table 6 and Table 7. Further, the meanings of "Lower limit formula" and "$\Delta$CT/Lower limit formula" in Table 11 to Table 13 are the same as the cases of Table 6 and Table 7.

[Table 11]

| No. | Tensile strength of steel sheet [MPa] | Radius of curvature R2 [mm] | Radius of curvature RI [mm] | Inclination angle C2 [°] | Inclination angle C1 [°] | Difference of radius of curvature ΔR [mm] | First difference of inclination angle ΔCA [°] | Total difference of inclination angle ΔCT [°] | Shear angle $\alpha$ [°] | Lower limit formula ($0.15 \times \alpha^2 + 0.05 \times \alpha + 1$) | ΔCT/Lower limit formula | Result of evaluation |
|---|---|---|---|---|---|---|---|---|---|---|---|---|
| 1 | 1180 | 0.05 | 0.15 | - | 10 | 0.1 | 10 | 18 | 0 | 1 | 18 | B |
| 2 | 1180 | 0.05 | 0.15 | - | 10 | 0.1 | 10 | 18 | 1 | 1.2 | 15 | B |
| 3 | 1180 | 0.05 | 0.15 | - | 10 | 0.1 | 10 | 18 | 2 | 1.7 | 10.588 | B |
| 4 | 1180 | 0.05 | 0.15 | - | 10 | 0.1 | 10 | 18 | 3 | 2.5 | 7.2 | A |
| 5 | 1180 | 0.05 | 0.15 | - | 10 | 0.1 | 10 | 18 | 4 | 3.6 | 5 | A |
| 6 | 1180 | 0.05 | 0.15 | - | 10 | 0.1 | 10 | 18 | 5 | 5 | 3.6 | A |
| 7 | 1180 | 0.05 | 0.15 | - | 10 | 0.1 | 10 | 18 | 6 | 6.7 | 2.6866 | B |
| 8 | 1180 | 0.05 | 0.15 | - | 10 | 0.1 | 10 | 18 | 8 | 11 | 1.6364 | C |
| 9 | 1180 | 0.05 | 0.15 | - | 10 | 0.1 | 10 | 18 | 10 | 16.5 | 1.0909 | C |

[Table 12]

| No. | Tensile strength of steel sheet [MPa] | Radius of curvature R2 [mm] | Radius of curvature RI [mm] | Inclination angle C2 [°] | Inclination angle C1 [°] | Difference of radius of curvature ΔR [mm] | First difference of inclination angle ΔCA [°] | Total difference of inclination angle ΔCT [°] | Shear angle $\alpha$ [°] | Lower limit formula ($0.15 \times \alpha^2 + 0.05 \times \alpha + 1$) | ΔCT/Lower limit formula | Result of evaluation |
|---|---|---|---|---|---|---|---|---|---|---|---|---|
| 1 | 980 | 0.05 | 0.15 | - | 10 | 0.1 | 10 | 18 | 0 | 1 | 18 | B |
| 2 | 980 | 0.05 | 0.15 | - | 10 | 0.1 | 10 | 18 | 1 | 1.2 | 15 | B |
| 3 | 980 | 0.05 | 0.15 | - | 10 | 0.1 | 10 | 18 | 2 | 1.7 | 10.588 | B |
| 4 | 980 | 0.05 | 0.15 | - | 10 | 0.1 | 10 | 18 | 3 | 2.5 | 7.2 | A |
| 5 | 980 | 0.05 | 0.15 | - | 10 | 0.1 | 10 | 18 | 4 | 3.6 | 5 | A |
| 6 | 980 | 0.05 | 0.15 | - | 10 | 0.1 | 10 | 18 | 5 | 5 | 3.6 | A |
| 7 | 980 | 0.05 | 0.15 | - | 10 | 0.1 | 10 | 18 | 6 | 6.7 | 2.6866 | B |
| 8 | 980 | 0.05 | 0.15 | - | 10 | 0.1 | 10 | 18 | 8 | 11 | 1.6364 | C |
| 9 | 980 | 0.05 | 0.15 | - | 10 | 0.1 | 10 | 18 | 10 | 16.5 | 1.0909 | C |

[Table 13]

| No. | Tensile strength of steel sheet [MPa] | Radius of curvature R2 [mm] | Radius of curvature Rl [mm] | Inclination angle C2 [°] | Inclination angle C1 [°] | Difference of radius of curvature ΔR [mm] | First difference of inclination angle ΔCA [°] | Total difference of inclination angle ΔCT [°] | Shear angle α [°] | Lower limit formula $(0.15 \times \alpha^2 + 0.05 \times \alpha +1)$ | ΔCT/Lower limit formula | Result of evaluation |
|---|---|---|---|---|---|---|---|---|---|---|---|---|
| 1 | 590 | 0.05 | 0.15 | - | 10 | 0.1 | 10 | 18 | 0 | 1 | 18 | B |
| 2 | 590 | 0.05 | 0.15 | - | 10 | 0.1 | 10 | 18 | 1 | 1.2 | 15 | B |
| 3 | 590 | 0.05 | 0.15 | - | 10 | 0.1 | 10 | 18 | 2 | 1.7 | 10.588 | B |
| 4 | 590 | 0.05 | 0.15 | - | 10 | 0.1 | 10 | 18 | 3 | 2.5 | 7.2 | A |
| 5 | 590 | 0.05 | 0.15 | - | 10 | 0.1 | 10 | 18 | 4 | 3.6 | 5 | B |
| 6 | 590 | 0.05 | 0.15 | - | 10 | 0.1 | 10 | 18 | 5 | 5 | 3.6 | B |
| 7 | 590 | 0.05 | 0.15 | - | 10 | 0.1 | 10 | 18 | 6 | 6.7 | 2.6866 | B |
| 8 | 590 | 0.05 | 0.15 | - | 10 | 0.1 | 10 | 18 | 8 | 11 | 1.6364 | C |
| 9 | 590 | 0.05 | 0.15 | - | 10 | 0.1 | 10 | 18 | 10 | 16.5 | 1.0909 | C |

As shown in Tables 11 to 13, in the case where the shear angle $\alpha$ was 5° and the case where the shear angle $\alpha$ was 6°, in the 590 MPa steel sheets, the results of evaluation were all "B", while in the 980 MPa high strength steel sheets and the 1180 MPa high strength steel sheets, the results of evaluation were all "A". In the present examples, in particular in the case where the shear angle $\alpha$ was 5° and the case where the shear angle $\alpha$ was 6°, it was learned that the effect of being able to suppress a drop in the fatigue properties and the hydrogen embrittlement resistance was greater in 980 MPa or more high strength steel sheets compared with 590 MPa steel sheets.

Further, in the above examples, embodiments using steel sheet as the workpiece were illustrated, but the art of the present disclosure is not limited to these embodiments. The art of the present disclosure, as explained above, features the point of determining the shape of the front end part (cutting edge) of the shearing apparatus in accordance with the shear angle and can exhibit similar effects regardless of the shape of the workpiece.

[INDUSTRIAL APPLICABILITY]

The steel material of the present disclosure can, for example, be used as material for components of automobiles, household electrical appliances, building structures, ships, bridges, construction machines, various types of plants, penstocks, etc.

REFERENCE SIGNS LIST

| | |
|---|---|
| 1 | sheared edge |
| 1a | rollover |
| 1b | fractured surface |
| 1bx | first part |
| 1by | second part |
| 1c | burr |
| 1dx | first crack |
| 1dy | second crack |
| 1e | burnished surface |
| 5 | workpiece |
| 10 | steel material |
| 11 | one part of workpiece |
| 12 | other part of workpiece |
| 15 | scrap |
| 21 | first cutting blade |
| 21a | first bottom surface |
| 21b | first side surface |
| 21x | first front end part (cutting edge) |
| 21y | first inclined surface |
| 21z | first curved surface |
| 22 | second cutting blade |
| 22a | second bottom surface |
| 22b | second side surface |
| 22x | second front end part (cutting edge) |
| 22y | second inclined surface |
| 22z | second curved surface |
| 100, 200, 300 | shearing apparatus |

**Claims**

1.  A steel material having a sheared edge, wherein

the sheared edge has a rollover, a fractured surface, and a burr,
the fractured surface includes a first part and a second part,
the first part is formed by a first crack propagating from the rollover side to the burr side,
the second part is formed by a second crack propagating from the burr side to the rollover side, and
an area ratio of the first part in the fractured surface is 1.2 times or more of an area ratio of the second part in the fractured surface.

2.  The steel material according to claim 1, wherein
the area ratio of the first part in the fractured surface is 1.5 times or more of the area ratio of the second part in the fractured surface.

3.  The steel material according to claim 1, wherein
the area ratio of the first part in the fractured surface is 2.0 times or more of the area ratio of the second part in the fractured surface.

4.  The steel material according to any one of claims 1 to 3, wherein
the steel material has a sheet shape.

5.  The steel material according to any one of claims 1 to 4, wherein
the steel material has a tensile strength of 980 MPa or more.

6.  The steel material according to claim 5, wherein
the steel material has a tensile strength of 1470 MPa or more.

7.  An auto part comprising the steel material according to any one of claims 1 to 6.

8.  A shearing apparatus comprising

    a first cutting blade and
    a second cutting blade, wherein
    the first cutting blade and the second cutting blade are configured to be able to move relative to each other,
    the first cutting blade has a first bottom surface, a first side surface, and a first front end part,
    the second cutting blade has a second bottom surface, a second side surface, and a second front end part, and
    a friction coefficient of the first front end part is 1.2 times or more of a friction coefficient of the second front end part.

9.  The shearing apparatus according to claim 8, wherein
the friction coefficient of the first front end part is 1.5 times or more of the friction coefficient of the second front end part.

10. The shearing apparatus according to claim 8, wherein
the friction coefficient of the first front end part is 2.0 times or more of the friction coefficient of the second front end part.

11. The shearing apparatus according to any one of claims 8 to 10, wherein
the second front end part is given a second coating.

12. The shearing apparatus according to any one of claims 8 to 11, wherein

    the second front end part is given a second coating,
    the first front end part is given a first coating, and
    a peeling life of the second coating is longer than a peeling life of the first coating.

13. The shearing apparatus according to any one of claims 8 to 12, wherein
a surface roughness of the first front end part is greater than a surface roughness of the second front end part.

14. A shearing apparatus comprising

    a first cutting blade and
    a second cutting blade, wherein
    the first cutting blade and the second cutting blade are configured to be able to move relative to each other,
    the first cutting blade has a first bottom surface, a first side surface, and a first front end part,
    the first front end part includes at least one of

        a first inclined surface inclined with respect to the first bottom surface and
        a first curved surface,

the second cutting blade has a second bottom surface, a second side surface, and a second front end part, the second front end part includes at least one of

a second inclined surface inclined with respect to the second bottom surface and
a second curved surface,

a shear angle $\alpha$ is formed between the first front end part and the second front end part,
$\Delta$CT calculated based on the following formulas (1) to (4) satisfies the relationship of

$$(0.15 \times \alpha^2 + 0.05 \times \alpha + 1) < \Delta CT \leq 40$$

$$\Delta CT = \Delta CA + \Delta CB \ \ldots(1)$$

$$\Delta CA = C2 - C1 \ \ldots(2)$$

$$\Delta CB = 80 \times \Delta R \ \ldots(3)$$

$$\Delta R = R2 - R1 \ \ldots(4)$$

where,
C1 [°] is a smaller angle which the first inclined surface forms with the first bottom surface,
C2 [°] is a smaller angle which the second inclined surface forms with the second bottom surface,
R1 [mm] is a radius of curvature of the first curved surface, and
R2 [mm] is a radius of curvature of the second curved surface.

15. The shearing apparatus according to claim 14, wherein

the first front end part has the first inclined surface and
the second front end part has the second inclined surface.

16. The shearing apparatus according to claim 14, wherein

the first front end part has the first curved surface and
the second front end part has the second curved surface.

17. The shearing apparatus according to claim 14, wherein

the first front end part has the first inclined surface and the first curved surface and
the second front end part has the second inclined surface and the second curved surface.

18. The shearing apparatus according to any one of claims 14 to 17, wherein
the shear angle $\alpha$ is 0.5° or more and 10° or less.

19. The shearing apparatus according to any one of claims 14 to 18, wherein

the shearing apparatus shears a steel sheet as a workpiece, and
a clearance between the first cutting blade and the second cutting blade is 5% or more and 25% or less of the thickness of the steel sheet.

20. A method of production of a steel material as a processed material using the shearing apparatus according to any one of claims 8 to 19, the method comprising:

placing a workpiece between the first cutting blade and the second cutting blade; and
making the first cutting blade and the second cutting blade move relative to each other to shear the workpiece.

21. The method of production according to claim 20, wherein a tensile strength of the workpiece is 980 MPa or more.

22. The method of production according to claim 20, wherein a tensile strength of the workpiece is 1470 MPa or more.

Fig. 1A

Fig. 1B

Fig. 1C

Fig. 1D

# Fig. 2A

# Fig. 2B

# Fig. 2C

Fig. 3A

Fig. 3B

Fig. 3C

# Fig. 4

# Fig. 5

# Fig. 6A

# Fig. 6B

Fig. 7A

Fig. 7B

Fig. 7C

Fig. 8

# Fig. 9A

# Fig. 9B

## Fig. 10A

100

21

32

22

## Fig. 10B

100

21

31

22

# Fig. 10C

100

21        31

32

22

# Fig. 11

21b

21

21a

α

22a

22b

22

# Fig. 12

200

# Fig. 13

# Fig. 14

200A

Fig. 15

Fig. 16

# Fig. 17

200B

Fig. 18

# Fig. 19

# Fig. 20

<u>300</u>

Fig. 21

Fig. 22

HYDROGEN
EMBRITTLEMENT
CRACKING

HYDROGEN
EMBRITTLEMENT
CRACKING

ROLLOVER, BURNISHED SURFACE

FRACTURED SURFACE (FIRST PART)

BP

FRACTURED SURFACE (SECOND PART)

# Fig. 23

Bar chart. Y-axis: TENSILE RESIDUAL STRESS IN SHEET THICKNESS DIRECTION [MPa], scale 0 to 1400. X-axis categories: PRODUCT, SCRAP. Legend: □ COMPARATIVE EXAMPLE, ▨ EXAMPLE.

## INTERNATIONAL SEARCH REPORT

| International application No. |
| --- |
| **PCT/JP2022/004311** |

### A. CLASSIFICATION OF SUBJECT MATTER

**B23D 15/06**(2006.01)i; **B21D 28/16**(2006.01)i; **B23D 35/00**(2006.01)i
FI:   B23D15/06 Z; B21D28/16; B23D35/00 B

According to International Patent Classification (IPC) or to both national classification and IPC

### B. FIELDS SEARCHED

Minimum documentation searched (classification system followed by classification symbols)
B23D15/06; B23D35/00; B21D28/16; B21D28/14; B21D28/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | 村田ツール株式会社 パンチプレス金型 [online], 14 July 2017 [retrieved on 11 March 2022], Internet:<URL:https://web.archive.org/web/20170714172532/https://www.muratec.jp/tool/punch/tech/faq/data14.html>, non-official translation (MURATA TOOL, LIMITED. punch press mold.) <br> lines 1-12, photo 3 | 1-4 |
| Y | | 5-7 |
| Y | 冷延鋼板 JFEスチール株式会社 [online], 28 May 2016 [retrieved on 11 March 2022], Internet:<URL:https://web.archive.org/web/20160528024038/https://www.jfe-steel.co.jp/products/usuita/catalog/b1j-002.pdf>, non-official translation (cold rolled steel. JFE STEEL CORPORATION.) <br> page 10 | 5-7, 21-22 |
| X | JP 10-5892 A (FURUYA, Katsuhito) 13 January 1998 (1998-01-13) <br> paragraph [0020], fig. 1, 2 | 8-11, 20 |
| Y | | 21-22 |
| A | | 12-13 |

| ✓ Further documents are listed in the continuation of Box C. | ✓ See patent family annex. |
| --- | --- |

| Date of the actual completion of the international search | Date of mailing of the international search report |
| --- | --- |
| **14 March 2022** | **29 March 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2022/004311**

**C.    DOCUMENTS CONSIDERED TO BE RELEVANT**

| Category* | Citation of document, with indication, where appropriate, of the relevant passages | Relevant to claim No. |
|---|---|---|
| X | US 5327806 A (GENERAL ELECTRIC COMPANY) 12 July 1994 (1994-07-12) column 3, line 20 to column 4, line 10, fig. 1-4 | 14-18 |
| Y | | 19-22 |
| Y | WO 2015/170707 A1 (NIPPON STEEL & SUMITOMO METAL CORPORATION) 12 November 2015 (2015-11-12) paragraph [0041] | 19-22 |
| A | JP 2006-272391 A (BROTHER IND., LIMITED) 12 October 2006 (2006-10-12) paragraph [0034], fig. 6 | 13 |
| E, X | JP 2022-31203 A (NIPPON STEEL CORPORATION) 18 February 2022 (2022-02-18) claims 1-6, paragraph [0057] | 1-7 |
| E, X | JP 2022-31207 A (NIPPON STEEL CORPORATION) 18 February 2022 (2022-02-18) claims 1-7, 9-10 | 8-13, 20-22 |
| E, X | JP 2022-31258 A (NIPPON STEEL CORPORATION) 18 February 2022 (2022-02-18) claims 1-8 | 14-21 |

Form PCT/ISA/210 (second sheet) (January 2015)

## INTERNATIONAL SEARCH REPORT

International application No.

**PCT/JP2022/004311**

| Box No. III | Observations where unity of invention is lacking (Continuation of item 3 of first sheet) |
|---|---|

This International Searching Authority found multiple inventions in this international application, as follows:

The common technical matter between the invention of claim 1 and the invention of claims 8-22 lies in relating to steel-material shearing alone. It is clear that this technical feature is not a special technical feature.

The claims include the three (groups of) inventions below.

These (groups of) inventions have special technical features as below.

(Invention 1) Invention of claims 1-7

A steel material "having a sheared end surface, wherein the ratio of an area occupied by a first portion in the fractured surface is 1.2 times or greater the ratio of an area occupied by a second portion in the fractured surface".

(Invention 2) Invention of claims 8-13 and 20-22

A shearing device, wherein "the friction coefficient of the first end part is 1.2 times or greater the friction coefficient of the second end part".

(Invention 3) Invention of claims 14-19

A shearing device, wherein "the first end part includes at least one of a first inclined surface inclined relative to the first bottom surface and a first curved surface, the second end part includes at least one of a second inclined surface inclined relative to the second bottom surface and a second curved surface, and the shear angle $\alpha$ between the first and second end parts, the smaller angle C1 formed by the first inclined surface with respect to the first bottom surface, the smaller angle C2 formed by the second inclined surface with respect to the second bottom surface, the radius of curvature R1 of the first curved surface, and the radius of curvature R2 of the second curved surface satisfy a predetermined relationship".

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2022/004311**

| Patent document cited in search report | | | Publication date (day/month/year) | Patent family member(s) | | | Publication date (day/month/year) |
|---|---|---|---|---|---|---|---|
| JP | 10-5892 | A | 13 January 1998 | (Family: none) | | | |
| US | 5327806 | A | 12 July 1994 | JP | 6-15524 | A | |
| | | | | paragraphs [0013]-[0017], fig. 1-4 | | | |
| | | | | EP | 566261 | A1 | |
| | | | | KR | 10-1993-0019316 | A | |
| | | | | CN | 1084791 | A | |
| WO | 2015/170707 | A1 | 12 November 2015 | US | 2017/0080475 | A1 | |
| | | | | paragraph [0091] | | | |
| | | | | KR | 10-2016-0143759 | A | |
| | | | | CN | 106457348 | A | |
| JP | 2006-272391 | A | 12 October 2006 | US | 2006/0219081 | A1 | |
| | | | | paragraph [0039], fig. 6 | | | |
| | | | | EP | 1707285 | A1 | |
| | | | | CN | 1840260 | A | |
| JP | 2022-31203 | A | 18 February 2022 | (Family: none) | | | |
| JP | 2022-31207 | A | 18 February 2022 | (Family: none) | | | |
| JP | 2022-31258 | A | 18 February 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016136909 A